# EUROPÄISCHE PATENTSCHRIFT

(11) **EP 3 129 181 B1**
(45) Veröffentlichungstag und Bekanntmachung des Hinweises auf die Patenterteilung: **12.07.2023**
(21) Anmeldenummer: 15708517.6
(22) Anmeldetag: 09.03.2015
(51) Int. Cl.: B23F 23/12, B24B 53/12

(54) **VERFAHREN UND VORRICHTUNGEN ZUM SCHNELLEN UND FLEXIBLEN ABRICHTEN VON SCHLEIFSCHNECKEN**
METHOD AND DEVICES FOR THE RAPID AND FLEXIBLE DRESSING OF GRINDING WORMS
PROCÉDÉ ET DISPOSITIFS POUR DRESSER DES MEULES (VIS SANS FIN) DE MANIÈRE RAPIDE ET FLEXIBLE

(30) Priorität: 08.04.2014 CH 544142014
(43) Veröffentlichungstag der Anmeldung: 15.02.2017
(73) Patentinhaber: Reishauer AG, 8304 Wallisellen (CH)
(72) Erfinder: WIRZ, Walter, CH-8330 Pfäffikon (CH)
(74) Vertreter: Detken, Andreas
(86) Internationale Anmeldenummer: PCT/EP2015/054803
(87) Internationale Veröffentlichungsnummer: WO 2015/154925

(56) Entgegenhaltungen:
- DE-A1- 4 329 360
- DE-A1- 19 910 746
- DE-A1-102012 002 126
- DE-U1- 8 607 328
- GB-A- 2 151 521
- JP-A- 2010 142 883
- US-A- 4 475 319
- US-A- 4 708 544
- US-A- 5 175 962

## Beschreibung

### TECHNISCHES GEBIET

Die vorliegende Anmeldung betrifft ein Verfahren zum Abrichten von Schleifschnecken, insbesondere von Schleifschnecken für das kontinuierliche Wälzschleifen, eine hierfür speziell ausgebildete Abrichtvorrichtung, eine entsprechend vorbereitete Werkzeugmaschine sowie ein entsprechendes Abrichtwerkzeug.

### STAND DER TECHNIK

Schleifschnecken werden eingesetzt zum Fein- bzw. Fertigbearbeiten von hochgenauen Verzahnungen, insbesondere bei Zahnrädern von Leistungsgetrieben, wie sie z.B. in der Fahrzeugindustrie in grosser Zahl zum Einsatz kommen. Das dabei angewendete Schleifverfahren ist das kontinuierliche Wälzschleifen, ein Verfahren, das bei hoher Leistungsfähigkeit und Genauigkeit auch eine grosse Flexibilität bezüglich der zu erzeugenden Flankenformen an den Werkstücken zulässt. Diese Flexibilität ist einerseits gegeben durch ein Zusammenwirken von einzelnen Maschinenbewegungen über mehrere Achsen während der Bearbeitung des Werkstücks und andererseits durch die Möglichkeit, schon auf der Schleifschnecke unterschiedlichste Flankenformen vorzusehen und diese auf das Werkstück abzubilden.

Häufig bestehen die Schleifschnecken aus abrichtbaren Körpern, die sich mit geeigneten Werkzeugen, z.B. Diamantwerkzeugen, präzise bearbeiten lassen. Für das Abrichten dieser Schleifschnecken sind in der Vergangenheit die unterschiedlichsten Arten von Verfahren entwickelt worden, die je nach Anforderungen einerseits mehr oder weniger kompliziert und andererseits mehr oder weniger flexibel sind.

In der überwiegenden Zahl aller Fälle dürfte heute das Abrichten mit scheibenförmigen Abrichtwerkzeugen, z.B. diamantbelegten Scheiben, erfolgen, bei denen die Flanke des Abrichtwerkzeugs (im Folgenden auch aktive Fläche genannt) ein Negativabbild der gewünschten Profilform (d.h. der Flankenform in Profilhöhenrichtung) auf der Schleifschnecke darstellt. Dies ermöglicht ein relativ rasches Abrichten. Das Abrichten erfolgt bewegungsmässig wie das Gewindefräsen oder das Gewindeschleifen, indem das Abrichtwerkzeug schnell um eine zur Schleifschneckenachse annähernd parallele Achse rotiert und mit seiner aktiven Fläche achsparallel an der sich drehenden Schleifschnecke vorbei geführt wird. Dabei steht das Abrichtwerkzeug mit der Schleifschnecke über die gesamte Profilhöhe in Linienkontakt. Dadurch wird die Profilform der aktiven Fläche des Abrichtwerkzeugs unmittelbar auf die Schleifschneckenflanke übertragen. In der Regel braucht es mehrere Durchgänge, um den ganzen Abrichtbetrag abzutragen. Bei mehrgängigen Schleifschnecken ist die Prozedur entsprechend für alle Gänge nötig. Sobald auf der Schleifschneckenflanke ein anderes Profil gefordert wird, ist demzufolge ein Abrichtwerkzeug mit einem anderen Flankenprofil notwendig. Weil die Profilform der aktiven Fläche am Abrichtwerkzeug während des Abrichtens 1:1 auf die Schleifschneckenflanke übertragen wird, kann sich zudem die Form der Schleifschneckenflanke über der Schneckenbreite nicht ändern. Komplexere Flankenformen, eigentliche Freiformflächen, wie sie für das topologische Schleifen erforderlich sind, lassen sich deshalb nach dieser Methode nicht abrichten. Auch ist die Drehzahl der Schleifschnecke beim Abrichten stark limitiert, weil das Abrichtwerkzeug ja entsprechend der Schneckensteigung ständig hin und her fahren muss.

Wirklich universell ist nur das Zeilenprofilieren. Bei diesem Verfahren, das kinematisch ähnlich funktioniert wie das oben beschriebene Abrichten, kommen ebenfalls scheibenförmige Werkzeuge zum Einsatz. Diese besitzen aber nur an ihrem äusseren Rand eine (meist torusförmige) aktive Fläche. Der Radius dieser Fläche, im Achsschnitt des Werkzeuges betrachtet, ist im Verhältnis zur abzurichtenden Profilhöhe klein, und die Fläche hat beim Abrichten mit der Schleifschneckenflanke daher in guter Näherung nur Punktkontakt. Beim axialen Durchfahren durch die Schneckengänge wird deshalb lediglich eine Linie, oder eben eine Zeile, auf der Schneckenflanke abgerichtet. Um die ganze Profilhöhe an der Schneckenflanke abzurichten, sind entsprechend viele Zeilen bzw.

Durchgänge nötig, wobei jede Zeile auf einem anderen Durchmesser auf der Schneckenflanke liegt und sich in ihrem axialen Verlauf, gesteuert durch ein NC-Programm, jeweils von den benachbarten geringfügig unterscheiden kann. Der Abstand von Zeile zu Zeile muss dabei so klein gewählt werden, dass die entstehende Welligkeit auf der abgerichteten Flanke hinreichend klein wird. Bei mehrgängig profilierten Schleifschnecken ist der ganze Prozess für jeden Gang notwendig. Dies führt zwangsläufig zu einer sehr hohen Abrichtzeit; sie beträgt auch im günstigsten Fall ein Vielfaches der Schleifzeit für ein Werkstück. In vielen Fällen ist die Abrichtzeit daher zu hoch, um wirtschaftlich zu sein.

In der DE 197 06 867 B4 sind Weiterbildungen der oben genannten Abrichtverfahren offenbart. Die DE 196 24 842 A1 offenbart Verfahren, bei denen Teile des Schneckengangprofils im Linienkontakt und andere Teile näherungsweise im Punktkontakt abgerichtet werden. In der WO 95/24989 sind Verfahren zum zeilenweisen Profilieren offenbart.

Das schnellste bekannte, zugleich aber auch das unflexibelste Abrichtverfahren verwendet einen sogenannten Abrichtmeister als Werkzeug; das ist ein zylindrisches Abrichtzahnrad oder, was verzahnungsgeometrisch dasselbe ist, eine Abrichtschnecke. Ein Abrichtmeister entspricht in seiner Verzahnungsform, was Modul und Modifikationen anbetrifft, exakt der zu schleifenden Werkstückverzahnung. Er ist an seinen Aussenflächen mit Hartstoffkörnern, z.B. Diamanten, belegt. Das Abrichten erfolgt, indem der Abrichtmeister anstelle eines Werkstücks mit der Schleifschnecke in Eingriff gebracht wird und wie ein Werkstück beim Schleifen parallel zur Schneckenachse an der Schleifschnecke vorbeigeshiftet wird. Dadurch wird die Flankenform des Meisters auf die Flanken der Schleifschnecke abgebildet. Falls die Profilform der Schneckengänge über der Breite der Schleifschnecke variabel sein soll, was zum Schleifen von topologischen Verzahnungen notwendig ist, muss der Abrichtmeister diese Topologie selbst auch aufweisen, und der Abrichtmeister muss sich gleichzeitig mit der Shiftbewegung in seiner Achsrichtung verschieben, so dass in der Summe eine Bewegung wie beim Diagonalschaben entsteht.

Eine Maschine, auf der nur nach dieser Methode abgerichtet wird, braucht keine spezielle Abrichteinrichtung, wenn der Abrichtmeister so gestaltet ist, dass er sich an Stelle eines Werkstückes einspannen und in Eingriff mit der Schleifschnecke bringen lässt; alle zum Abrichten notwendigen Bewegungen sind dann dieselben wie beim Schleifen eines Werkstückes. Die benötigte Abrichtzeit entspricht etwa der Schleifzeit für ein Werkstück. Ein Beispiel eines Abrichtverfahrens mit diamantbelegtem Abrichtmeister ist in der US 3,602,209 offenbart.

So schnell dieses Verfahren auch ist, es ist gänzlich unflexibel. Will man auch nur geringe Änderungen an den Modifikationen vornehmen, ist im Allgemeinen mindestens ein Umarbeiten des Abrichtmeisters notwendig, meist aber eine Neuherstellung. Beides ist mit grossem Aufwand und hohen Kosten verbunden. Zudem ist die Herstellung eines Meisters generell sehr teuer, da er ja exakt die Form der zu schleifenden Verzahnung in allen Aspekten enthalten muss, also immer eine massgeschneiderte Einzelausführung ist. Insgesamt existiert bis heute also kein brauchbares Verfahren, welches Schleifschnecken effizient und flexibel auf eine per NC-Programm beschreibbare Form abzurichten in der Lage ist. Das ist ein Grund dafür, dass sich das so genannte "topologische Schleifen" bis heute in der Massenproduktion nicht durchsetzen konnte, obwohl vom technischen Standpunkt aus dafür durchaus Bedarf besteht. Falls ein solches Abrichtverfahren verfügbar wäre, liessen sich dadurch auch sehr komplexe Verzahnungen wirtschaftlich herstellen. Es eröffneten sich dann für die Konstrukteure neue Möglichkeiten bei der Optimierung des Leistungsdurchsatzes und der Geräuscharmut von Getrieben.

US 5,175,962, die die Basis für die Oberbegriffe der unabhängigen Ansprüche bildet, offenbart ein Abrichtverfahren, bei dem der Mittelpunkt eines zahnradförmigen Abrichtwerkzeugs entlang einer kreisbogenförmigen Bahn an einer sanduhrförmigen Schleifschnecke entlang bewegt wird, während das Abrichtwerkzeug in Wälzeingriff mit der Schleifschnecke steht. Um Modifikationen zu erzeugen, wird von der Kreisbogenform der Mittelpunktsbewegung des Abrichtwerkzeugs abgewichen.

US 4,708,544 offenbart eine Wälzschälmaschine, bei der einem Werkstück zur Erzeugung des Schrägungswinkels eine Zusatzdrehbewegung überlagert wird. Dazu wird das Gehäuse eines Impulsgebers für die Werkstückspindel mit einem zusätzlichen Motor verdreht, sodass sich der Bezugspunkt für die Regelung der Drehung des Antriebsmotors für die Werkstückspindel ändert.

DE 86 07 328 U offenbart eine Wälzschälmaschine, bei der zur Erzeugung eines Schrägungswinkels eine Zusatzdrehbewegung ausgeführt wird.

JP 2010 142 883 A und GB 2 151 521 offenbaren Abrichtwerkzeuge, die von Zahnrädern abgeleitet sind, wobei Teile der Zähne oder ganze Zähne weggelassen wurden.

### DARSTELLUNG DER ERFINDUNG

Es ist eine Aufgabe der vorliegenden Erfindung, ein Verfahren zum Abrichten einer einoder mehrgängigen Schleifschnecke anzugeben, welches mit einem einfachen Standardwerkzeug arbeiten kann, welches ein schnelles Abrichten ermöglicht, aber welches trotzdem hochflexibel bezüglich der erzeugbaren Flankenmodifikationen ist.

Diese Aufgabe wird durch ein Verfahren gemäss Anspruch 1 gelöst. Die Ansprüche 9 und 10 definieren jeweils eine Werkzeugmaschine, die speziell dazu hergerichtet ist, das genannte Verfahren auszuführen. Weitere Ausführungsformen sind in den abhängigen Ansprüchen angegeben.

Das erfindungsgemässe Verfahren zum Abrichten einer ein- oder mehrgängigen Schleifschnecke weist zunächst einmal die folgenden Eigenschaften auf: Zwischen der Schleifschnecke und einem zahnradartigen Abrichtwerkzeug, d.h. einem Abrichtwerkzeug mit einem oder mehreren Zähnen auf seinem Aussenumfang, wird eine Grundwälzbewegung erzeugt. Dazu wird üblicherweise die Schleifschnecke zu einer Grunddrehbewegung um eine Schleifschneckenachse angetrieben; das Abrichtwerkzeug wird zu einer Grunddrehbewegung um eine Abrichtwerkzeugachse angetrieben, wobei die Abrichtwerkzeugachse gekreuzt (quer) zur Schleifschneckenachse verläuft, und zwischen Abrichtwerkzeug und Schleifschnecke wird zudem eine Shiftbewegung entlang der Schleifschneckenachse erzeugt (z.B. indem die Schleifschnecke entlang ihrer Achse gegenüber dem Abrichtwerkzeug bewegt wird oder indem das Abrichtwerkzeug gegenüber der Schleifschnecke entlang deren Achse bewegt wird). Die Grunddrehbewegung der Schleifschnecke, die Grunddrehbewegung des Abrichtwerkzeugs und die Shiftbewegung sind dann derart gekoppelt, dass die Schleifschnecke und das Abrichtwerkzeug während des Abrichtvorgangs jederzeit in korrektem Wälzeingriff stehen. Aufgrund der Grundwälzbewegung alleine würde sich das Abrichtwerkzeug relativ zu dem Bereich der Schleifschneckenflanke, mit der das Abrichtwerkzeug zu einem beliebigen Zeitpunkt des Abrichtvorgangs in Eingriff steht, immer an derselben axialen Stelle befinden, d.h. das Abrichtwerkzeug würde jederzeit den gleichen Abrichtbetrag von der Schleifschneckenflanke abtragen.

Insoweit entspricht das erfindungsgemässe Verfahren grundsätzlich einem üblichen Abrichtverfahren mit einem Abrichtmeister, und insoweit wird bei diesem Verfahren zunächst einmal die Flankenform der Zähne des Abrichtwerkzeugs auf die Schleifschneckenflanke abgebildet.

Erfindungsgemäss wird der Grundwälzbewegung zwischen dem Abrichtwerkzeug und der Schleifschnecke eine zusätzliche Relativbewegung überlagert. Diese zusätzliche Relativbewegung kann auf verschiedene Weisen erzeugt werden. Bevorzugt wird die zusätzliche Relativbewegung durch eine Zusatzdrehbewegung des Abrichtwerkzeugs um die Abrichtwerkzeugachse erzeugt, die der Grunddrehbewegung des Abrichtwerkzeugs überlagert ist. Dadurch wird unmittelbar der Abrichtbetrag verändert, welcher durch das Abrichtwerkzeug von der Schleifschneckenflanke abgetragen wird. Alternativ ist es aber auch denkbar, der Grunddrehbewegung der Schleifschnecke eine Zusatzdrehbewegung zu überlagern. Dadurch schraubt sich die Schleifschnecke gewissermassen gegen die Flanke des Abrichtwerkzeugs bzw. von dieser weg, wodurch ebenfalls der Abrichtbetrag, der durch das Abrichtwerkzeug von der Schleifschneckenflanke abgetragen wird, verändert wird. Es ist auch denkbar, der Shiftbewegung eine axiale Zusatzbewegung zwischen Schleifschnecke und Abrichtwerkzeug entlang der Schleifschneckenachse zu überlagern, wobei diese axiale Zusatzbewegung erzeugt werden kann, indem das Abrichtwerkzeug gegenüber der Schleifschnecke zusätzlich verschoben wird oder indem die Schleifschnecke gegenüber dem Abrichtwerkzeug zusätzlich verschoben wird. Eine analoge weitere Möglichkeit besteht darin, die Zusatzbewegung in der so genannten X-Achse zu realisieren. Hierbei erfolgt eine kleine Relativbewegung zwischen dem Abrichtwerkzeug und der Schleifschnecke, indem sich Abrichtwerkzeug und der Schleifschnecke bezüglich einer Richtung, die senkrecht zur Drehachse des Abrichtwerkzeugs und senkrecht zur Schleifschneckenachse steht, aufeinander zu und voneinander weg bewegen. Auch eine Relativbewegung entlang der so genannten Z-Achse ist denkbar. Diese Möglichkeiten zur Erzeugung der zusätzlichen Relativbewegung können auch kombiniert werden.

Durch die zusätzliche Relativbewegung werden Modifikationen auf der Schleifschneckenflanke erzeugt, d.h. die Schleifschneckenflanke erhält eine Profilform, die von der Form abweicht, wie sie allein durch die Abbildung der Flankenform der Zähne des Abrichtwerkzeugs aufgrund der Wälzkopplung resultieren würde.

Das erfindungsgemässe Verfahren teilt also die gesamte Relativbewegung zwischen Schleifschnecke und Abrichtwerkzeug in eine Grundwälzbewegung und eine Zusatzbewegung auf, wobei die Zusatzbewegung die gewünschten Modifikationen der Schleifschneckenflanke repräsentiert. Wenn die Zusatzbewegung z.B. durch eine Zusatzdrehbewegung des Abrichtwerkzeugs erzeugt wird, wird die Gesamtdrehbewegung des Abrichtwerkzeuges in eine Grunddrehbewegung mit einer Grunddrehzahl *n_{g}* und in eine überlagerte Zusatzdrehbewegung, welche die gewünschte Modifikation repräsentiert, aufgeteilt.

Die Winkelgeschwindigkeit ω_{g} der Grunddrehbewegung des Abrichtwerkzeugs hängt allein von den geometrischen Eigenschaften des Abrichtwerkzeugs und der Schleifschnecke (konkret vom Verhältnis *i* = *z* / *g* zwischen der Auslegungszähnezahl *z* des Abrichtwerkzeugs und der Gangzahl *g* der Schleifschnecke), von der Winkelgeschwindigkeit ωₛ der Grunddrehbewegung der Schleifschnecke sowie von der Geschwindigkeit *v*_{y} der Shiftbewegung ab. Wie nachstehend noch beschrieben wird, können beim Abrichtwerkzeug Zähne entfernt sein. Als "Auslegungszähnezahl" wird dann diejenige Zahl von Zähnen bezeichnet, die eine gleiche Verzahnung mit dem gleichen Durchmesser und dem gleichen Schrägungswinkel hätte, wenn keine Zähne entfernt worden wären. In anderen Worten ist die Auslegungszähnezahl diejenige Zahl von Zähnen, die über den Umfang des Abrichtwerkzeugs vorhanden wäre, wenn während der Wälzbewegung in jede Lücke zwischen zwei Gegenflanken der Schleifschnecke jeweils genau ein Zahn eintauchen würde. Die Winkelgeschwindigkeit der Grunddrehbewegung des Abrichtwerkzeugs hat über die gesamte Shiftbewegung hinweg ein festes Vorzeichen. Bei konstanter Winkelgeschwindigkeit ωₛ der Grunddrehbewegung der Schleifschnecke und konstanter Geschwindigkeit *v*_{y} der Shiftbewegung ist auch die Winkelgeschwindigkeit der Grunddrehbewegung des Abrichtwerkzeugs konstant. Die Winkelgeschwindigkeit der Grunddrehbewegung ändert sich nur dann, wenn sich die Winkelgeschwindigkeit der Schleifschnecke und/oder die Shiftgeschwindigkeit ändern. Die Grunddrehbewegung des Abrichtwerkzeugs entspricht damit der Werkstückdrehbewegung, wie sie auf den bekannten Wälzschleifmaschinen standardmässig erzeugt wird.

Die zusätzliche Relativbewegung hängt vom Drehwinkel der Schleifschnecke ab. Sie ändert ihren Betrag also in Abhängigkeit vom Drehwinkel der Schleifschnecke. Dabei ändert die zusätzliche Relativbewegung während des Abrichtvorgangs mehrfach ihre Richtung. Wie nachstehend noch näher erläutert wird, erfolgen diese Richtungsänderungen meist näherungsweise periodisch, bezogen auf den Drehwinkel der Schleifschnecke. Insbesondere falls letztendlich am Werkstück eine einfache Profilmodifikation, die über die Breite des Werkstücks konstant ist, erzeugt werden soll (z.B. eine einfache Profilballigkeit ohne so genannte topologische Modifikationen), wird über den gesamten Shiftbereich periodisch dasselbe Zusatzbewegungsmuster wiederholt. Das Abrichtergebnis entspricht dann demjenigen, das mit bekannten Abrichtscheiben erreicht werden kann.

Falls allgemeinere, "topologische" Modifikationen auf der Werkstückflanke erwünscht sind, ändert sich zusätzlich das Zusatzbewegungsmuster über den Shiftbereich hinweg als Funktion des Shiftwegs. Die erzeugte Modifikation auf den Schleifschneckenflanken ist damit an jeder Shiftposition bzw. an jeder Stelle über die Schneckenbreite anders. Über den gesamten Abrichtvorgang hinweg mittelt sich die Geschwindigkeit der zusätzlichen Relativbewegung in der Regel nahezu zu Null aus.

Die zusätzliche Relativbewegung wird vorzugsweise NC-gesteuert erzeugt. Die Modifikationen können so in einem NC-Programm einer NC-Steuerungseinrichtung vorgegeben werden und lassen sich bei Bedarf rasch ändern. Das NC-Programm setzt die Modifikationen dann in die entsprechenden Zusatzbewegungen von Abrichtwerkzeug und/oder Schleifschnecke um. Ähnlich wie mit dem sehr viel langsameren bekannten Zeilenprofilieren lassen sich auf diese Weise auch komplexe 3D-Freiformflächen per NC-Programm abrichten. Im Gegensatz zum Zeilenprofilieren ist das erfindungsgemässe Verfahren sehr effizient.

Das erfindungsgemässe Verfahren nutzt die Eigenschaft des Eingriffes von zwei unter gekreuzten Achsen kämmenden zylindrischen Zahnrädern, dass zwischen den Flanken normalerweise nur Punktberührung entsteht. Eine Schleifschnecke ist verzahnungsgeometrisch ein stark schrägverzahntes Zylinderrad. Das erfindungsgemässe Verfahren nutzt nun aus, dass die beim Kämmen entstehenden Berührspuren auf der Schneckenflanke beinahe unabhängig sind von der Geometrie der Verzahnung des Zylinderrades. Ob es eine Gerad- oder Schrägverzahnung mit grosser oder kleiner Balligkeit, mit oder ohne überlagerter Topologie ist: die Berührspuren auf der Schneckenflanke haben immer ungefähr die gleiche Gestalt, nämlich spiralförmig über üblicherweise etwa zwei Gangteilungen vom Fuss zum Kopf bzw. vom Kopf zum Fuss über die Flanke verlaufend. Daraus folgt, dass beim Schleifen einer nicht modifizierten Geradverzahnung im kontinuierlichen Wälzverfahren nahezu dieselben Berührspuren auf der Schleifschneckenflanke entstehen, wie wenn z.B. eine topologisch modifizierte Schrägverzahnung geschliffen würde. Dass es nicht genau dieselben Berührspuren sind, liegt daran, dass die Eingriffswinkel in den Bereichen der Modifikationen geringfügig ändern. Da jedoch die Modifikationen meistens mindestens zwei Grössenordnungen kleiner sind als die entsprechende Profilhöhe, sind die Abweichungen insgesamt doch sehr gering.

Wird jetzt gedanklich eine nicht modifizierte, theoretisch exakte Evolventen-Geradverzahnung mit der Zähnezahl *z* zum Eingriff gebracht mit einer Schnecke mit Gangzahl *g*, die keine Schleifschnecke ist, sondern eine Getriebeschnecke, deren Flanken aber genau die Form haben, die eine Schleifschnecke zum Schleifen einer balligen Verzahnung haben müsste, dann fände zwar eine Flankenberührung in etwa auf den erwähnten Berührspuren statt, aber es würde ein unregelmässiger Lauf des Zahnrades resultieren. Das Verzahnungsgesetz wäre nicht mehr erfüllt, d.h. das Übersetzungsverhältnis *i* = *z* / *g* wäre nicht mehr für jeden Drehwinkel der Schleifschnecke konstant. Effektiv wäre es sogar so, dass fast stets nur eine einzige Flanke der Geradverzahnung Berührung haben könnte, auch wenn der Überdeckungsgrad ungefähr zwei wäre, was bei normalen Verzahnungen fast immer der Fall ist, oder anders ausgedrückt, es würde gar nicht mehr auf der ganzen Länge der Berührspuren zum Kontakt mit der Schneckenflanke kommen. Dies deshalb, weil nur immer diejenige Zahnradflanke im Wälzbereich mit der Schnecke Kontakt haben könnte, die den Zonen mit den momentan grössten positiven Modifikationsbeträgen am nächsten ist. Die jeweils vor- bzw. nacheilende Flanke hätte zu diesem Zeitpunkt keinen Kontakt mit der Schneckenflanke.

Anders wäre es, wenn nur eine einzige Flanke der Geradverzahnung durch die Schnecke wälzte, sozusagen eine Verzahnung, bei der von *z* Zähnen *z*-1 Zähne entfernt sind. In diesem Fall wäre der Eingriff durch eine vor- oder nacheilende Flanke nicht mehr gestört. Es ergäbe sich dann für die Dauer des Eingriffes natürlich immer noch ein unregelmässiger Lauf, aber die Berührspuren auf der Schneckenflanke kämen jeweils auf ihrer ganzen Länge zum Einsatz. Die Unregelmässigkeit der Drehbewegung der Geradverzahnung wäre jetzt ein Abbild der auf der Schnecke vorhandenen Modifikationen.

Genauer gesagt: Die Drehbewegung dieses Zahnrades mit dem einen Zahn würde sich während des Durchwälzens durch die Schnecke zusammensetzen aus der Grunddrehbewegung, die gegeben ist durch das Zähnezahl/Gangzahl-Verhältnis *i* = *z* / *g*, die Drehbewegung der Schnecke und die Shiftbewegung *v_{y}*, und einem überlagerten Anteil von ganz kleinen Zusatzdrehbewegungen (im Folgenden auch als "Mikrobewegungen" bezeichnet), die sich auf Grund der Modifikationen auf den Schneckenflanken ergäben.

Betrag und Richtung der kleinen Drehbewegungen würden dabei vom Drehwinkel der Schnecke abhängen.

Es versteht sich von selbst, dass bei dieser Betrachtung die Gegenflanke des einzelnen Zahnes keine Berührung haben dürfte; vielmehr müsste am Zahn der Geradverzahnung die Rückseite so weit zurück gesetzt sein, dass immer genügend Spiel vorhanden wäre zur Schneckengegenflanke.

Wird dieses Gedankenmodell auf eine topologisch modifizierte Schnecke projiziert, dann ergäbe sich beim Shiften des "einzähnigen" Zahnrades über die Schneckenbreite an jeder Shiftposition, an welcher die Zahnflanke durch die Schneckengänge durchwälzen würde, eine andere überlagerte Mikrobewegung. Betrag und Richtung jeder einzelnen dieser Mikrobewegungen wäre in diesem Fall nicht nur zugeordnet zum Drehwinkel der Schnecke, sondern auch zur jeweiligen Shiftposition. Die Gesamtheit aller dieser überlagerten Mikrobewegungen würde dann die ganze Topologieform repräsentieren.

Ersetzt man nun als nächsten Schritt die oben beschriebene Schnecke wieder durch eine Schleifschnecke und die mit ausgesetzten Zähnen versehene Geradverzahnung durch ein diamantbelegtes oder mit anderen geeigneten Hartstoffkörnern belegtes Abrichtwerkzeug, welches durch geeignete Mittel dazu angetrieben wird, sich mit dem eben beschriebenen unregelmässigen Lauf zu drehen, dann lässt sich damit die Schleifschnecke auf die gewünschte Form abrichten. Das Abrichtwerkzeug wird während des kontinuierlichen Laufes über die Schneckenbreite hinweg geshiftet, damit letztere vollständig abgerichtet wird; dabei ändert sich laufend das Muster der überlagerten Mikrobewegungen nach Betrag und Richtung in Abhängigkeit von der Shiftposition. Das Profilieren der Schneckengegenflanke erfolgt analog in einem zweiten Durchgang mit der Gegenflanke des Zahnes am Abrichtwerkzeug.

In den vorstehenden Überlegungen wird von einem Abrichtwerkzeug mit einem einzigen Zahn ausgegangen. Das Abrichtwerkzeug kann aber durchaus auch mehr als nur einen Zahn am Umfang aufweisen. Bedingung ist lediglich, dass die Zähne so weit auseinander stehen, dass zwei oder mehr gleichliegende (d.h. rechte bzw. linke) Flanken nie gleichzeitig zum Eingriff kommen; d.h. der Abstand zweier aufeinanderfolgender Zähne sollte immer grösser sein, als die Eingriffsstrecke lang ist. Dadurch ist gewährleistet, dass sich die Zähne beim Ausführen der Mikrobewegung nicht gegenseitig stören. In den allermeisten Fällen ist das der Fall, wenn nur jeder dritte Zahn vorhanden ist. Ein beispielhaftes Abrichtwerkzeug könnte also so aussehen, wie wenn von einem geradverzahnten Zahnrad mit *z* Zähnen jeweils immer von drei Zähnen zwei entfernt worden wären. An den stehen gebliebenen Zähnen sollte die Zahndicke so verringert sein, dass nie Zweiflankenkontakt mit der Schleifschnecke entstehen könnte.

Zudem wird in den obenstehenden Überlegungen von einer Geradverzahnung auf dem Abrichtwerkzeug ausgegangen. Die Überlegungen lassen sich jedoch ohne weiteres auch auf eine Schrägverzahnung übertragen.

Allgemeiner ausgedrückt, weist ein bevorzugtes Abrichtwerkzeug auf seinem Aussenumfang einen oder mehrere vorzugsweise identisch ausgebildete Zähne einer Gerad- oder Schrägverzahnung auf. Jeder Zahn hat eine Zahnhöhe in radialer Richtung und eine Zahndicke in Umfangsrichtung. Zwischen zwei Zähnen ist jeweils ein Zahnabstand in Umfangsrichtung vorgesehen. Zahndicke und Zahnabstand sind dann so gewählt, dass sich das Abrichtwerkzeug und die Schleifschnecke zu jedem Zeitpunkt während des Abrichtens an höchstens einem einzigen Kontaktpunkt berühren.

Das Abrichtwerkzeug ist vorzugsweise von einem gerad- oder schrägverzahnten Zahnrad mit einer Auslegungszähnezahl *z* abgeleitet, wobei auf dem Zahnrad eine gegenüber der Auslegungszähnezahl *z* reduzierte Zahl von Zähnen vorhanden ist und wobei jeweils zwischen zwei vorhandenen Zähnen mindestens ein Zahn ausgespart ist. Vorzugsweise sind jeweils zwei oder drei Zähne ausgespart.

Durch das erfindungsgemässe Verfahren werden auf der Schleifschneckenflanke dicht nebeneinander liegende Abrichtspuren erzeugt, die in ihrer Gesamtheit eine vorgebbare Schleifschneckenflankenform ergeben. Diese Abrichtspuren entsprechen prinzipiell den Berührspuren, die auch beim anschliessenden Schleifen im Kontakt mit den Werkstückflanken entstehen.

Wie schon erwähnt, wird die zusätzliche Relativbewegung zwischen Abrichtwerkzeug und Schleifschnecke vorzugsweise erzeugt, indem der Grunddrehbewegung des Abrichtwerkzeugs eine Zusatzdrehbewegung überlagert wird. Dies ist unter anderem deswegen bevorzugt, weil das Trägheitsmoment des Abrichtwerkzeugs im Vergleich zum Trägheitsmoment der Schleifschnecke in der Regel erheblich kleiner ist, so dass schnelle Zusatzdrehbewegungen am Abrichtwerkzeug einfacher erzeugt werden können als an der Schleifschnecke. Auch sind schnelle Zusatzdrehbewegungen des Abrichtwerkzeugs in der Regel einfacher und präziser zu erzeugen als schnelle, kleine axiale Zusatzbewegungen zwischen Schleifschnecke und Abrichtwerkzeug entlang der Schleifschneckenachse. Die Zusatzdrehbewegung des Abrichtwerkzeugs kann auf verschiedene Arten erzeugt werden. Eine erste Möglichkeit besteht darin, dass sowohl die Grunddrehbewegung als auch die Zusatzdrehbewegung des Abrichtwerkzeugs durch einen gemeinsamen Antrieb erzeugt werden. Eine zweite Möglichkeit besteht darin, dass hierfür separate Antriebe vorgesehen werden.

Insbesondere sind Ausführungsformen denkbar, bei denen das Abrichtwerkzeug anstelle eines Werkstücks auf einer Werkstückspindel mit einem Werkstückspindelantrieb aufgespannt ist und bei denen der Werkstückspindelantrieb sowohl die Grunddrehbewegung als auch die Zusatzdrehbewegung des Abrichtwerkzeugs erzeugt. In anderen Worten dient in solchen Ausführungsformen die Werkstückspindel als Abrichtspindel. Prinzipiell erfordert das Verfahren auf einer Zahnflankenschleifmaschine, die im kontinuierlichen Wälzverfahren schleifen kann, für das Abrichten also lediglich ein besonderes Abrichtwerkzeug, welches sich an Stelle des Werkstückes auf der Werkstückspindel aufspannen lässt. Eine gesonderte Abrichtvorrichtung ist theoretisch nicht notwendig. Voraussetzung ist allerdings, dass die Werkstückspindel die geforderten Zusatzdrehbewegungen hinreichend genau und schnell ausführen kann.

In Praxis wird es allerdings häufig so sein, dass die Werkstückspindel bzw. deren Antrieb nicht optimal für die Erzeugung der geforderten kleinen Zusatzdrehbewegungen geeignet ist. Die Werkstückspindeln von kontinuierlichen Wälzschleifmaschinen sind aus Steifigkeitsgründen meist sehr robust gebaut, wodurch sie auch ein relativ grosses Trägheitsmoment aufweisen. Dieses ist für das Schleifen durchaus erwünscht, denn es filtert Störkräfte heraus, erschwert aber die Ausführung von gezielt aufgebrachten, kleinen und schnellen Zusatzdrehbewegungen. Auch die Antriebsregelung ist primär optimiert für ein gutes Störverhalten, während das Führungsverhalten nicht in erster Linie entscheidend ist. Die Anforderungen an ein System, das kleine, aber schnelle Drehbewegungen erzeugen soll, sind gerade entgegengesetzt: möglichst kleine Masse und eine Antriebsregelung, die ein sehr gutes Führungsverhalten hat. Es ist daher von Vorteil, wenn eine spezielle Abrichteinrichtung vorgesehen wird.

Dementsprechend sind Ausführungsformen möglich, in denen das Abrichtwerkzeug auf einer separaten Abrichtspindel mit einem Abrichtspindelantrieb aufgespannt ist, wobei der Abrichtspindelantrieb sowohl die Grunddrehbewegung als auch die Zusatzdrehbewegung des Abrichtwerkzeugs erzeugt.

Es sind aber auch Ausführungsformen möglich, bei denen die Zusatzdrehbewegungen separat durch einen Zusatzantrieb erzeugt werden. In diesem Fall kann die Grunddrehbewegung des Abrichtwerkzeugs durch den Werkstückantrieb zur Verfügung gestellt werden. Die Grunddrehbewegung des Abrichtwerkzeugs kann aber auch durch eine separate, für das Abrichten optimierte Abrichtspindel erzeugt werden. Dies ist, obwohl es einen nicht unbeträchtlichen Aufwand bedeutet, in vielen Fällen die zweckmässigere Lösung. Welche Bauart die günstigere ist, wird vom Maschinenkonzept abhängen und davon, wie und für welchen Zweck die Maschine zum Einsatz kommen soll.

Die Zusatzdrehbewegungen des Abrichtwerkzeugs werden in beiden Fällen von einem speziellen, auf die spezifischen Erfordernisse abgestimmten Zusatzantrieb erzeugt, der auf der Werkstück- oder Abrichtspindel montiert ist. Das Besondere an diesem Zusatzantrieb ist, dass er selbst auf einer drehenden Spindel sitzt. Das Abrichtwerkzeug ist in diesem Fall also auf dem Zusatzantrieb aufgespannt, wobei der Zusatzantrieb selbst auf eine Werkstück- oder Abrichtspindel mit einem Werkstück- oder Abrichtspindelantrieb montiert ist. Der Werkstück- oder Abrichtspindelantrieb erzeugt dann die Grunddrehbewegung des Abrichtwerkzeugs, und der Zusatzantrieb erzeugt die Zusatzdrehbewegung.

Entsprechend bezieht sich die Erfindung auch auf einen Zusatzantrieb zum Antreiben eines zahnradartigen Abrichtwerkzeugs, der sich durch folgende Eigenschaften auszeichnet: Der Zusatzantrieb ist dazu ausgebildet, an einer Werkstück- oder Abrichtspindel einer Werkzeugmaschine angebracht zu werden, welche eine Grunddrehbewegung um eine Werkstück- oder Abrichtspindelachse erzeugt, und der Zusatzantrieb ist von einer NC-Steuerung ansteuerbar, so dass der Zusatzantrieb der Grunddrehbewegung eine Zusatzdrehbewegung um die Werkstück- oder Abrichtspindelachse überlagern kann.

Für die Gestaltung des Zusatzantriebs sind viele unterschiedliche Ausführungen denkbar, z.B. Ausführungen mit normalen Servomotoren bzw. Torque-Motoren oder mit Piezoaktoren. Um Energie und Daten mit der rotierenden Abrichteinrichtung auszutauschen, sind ebenfalls viele verschiedene Möglichkeiten denkbar. Darunter befinden sich Ausführungen mit Schleifringen und berührungsfrei arbeitende Systeme. Bei berührungsfrei arbeitenden Systemen können die Energie und/oder die Daten insbesondere induktiv übertragen werden mittels eines Transformators, dessen eine Windung stillsteht und dessen andere Windung mit der Abrichteinrichtung rotiert. Daten können auch optisch übertragen werden.

Die Erfindung bezieht sich auch auf eine Werkzeugmaschine, die speziell dazu hergerichtet ist, das erfindungsgemässe Verfahren auszuführen. Eine solche Werkzeugmaschine weist auf:
eine Schleifschneckenspindel mit einem Schleifschneckenspindelantrieb zur Erzeugung einer Drehbewegung um eine Schleifschneckenspindelachse;
eine Schleifschnecke, die auf der Schleifschneckenspindel aufgespannt ist;
ein zahnradartiges Abrichtwerkzeug;
eine Werkstück- oder Abrichtspindel mit einem Werkstück- oder Abrichtspindelantrieb zur Erzeugung einer Grunddrehbewegung des Abrichtwerkzeugs um eine Werkstück- oder Abrichtspindelachse, wobei die Werkstück- oder Abrichtspindelachse gekreuzt zur Schleifschneckenspindelachse verläuft;
einen Shiftantrieb, um die Schleifschneckenspindel bzw. die Werkstück- oder Abrichtspindel entlang der Schleifschneckenachse relativ zueinander zu verschieben (vershiften);
eine horizontale Zustelleinrichtung, um die Schleifschnecke und das Abrichtwerkzeug aufeinander zu und voneinander weg zu bewegen; und
eine NC-Steuerung, die den Schleifschneckenspindelantrieb, den Werkstück- oder Abrichtspindelantrieb und den Shiftantrieb elektronisch koppelt, um während des Abrichtvorgangs eine Grundwälzbewegung zwischen Schleifschnecke und Abrichtwerkzeug zu erzeugen.

Um das erfindungsgemässe Verfahren ausführen zu können, kann dann vorgesehen sein, dass die NC-Steuerung den Werkstück- oder Abrichtspindelantrieb, den Schleifschneckenspindelantrieb, den Shiftantrieb und/oder die horizontale Zustelleinrichtung zusätzlich derart ansteuert, dass der Grundwälzbewegung eine zusätzliche Relativbewegung überlagert wird, um zusätzliche Modifikationen der Schleifschneckenflanke zu erzeugen. Alternativ kann vorgesehen sein, dass die Werkzeugmaschine einen Zusatzantrieb der oben genannten Art aufweist, wobei die NC-Steuerung diesen Zusatzantrieb derart ansteuert, dass er der Grunddrehbewegung des Abrichtwerkzeugs eine Zusatzdrehbewegung um die Werkstück- oder Abrichtspindelachse überlagert, um die zusätzlichen Modifikationen der Schleifschneckenflanke zu erzeugen. In beiden Fällen kann die NC-Steuerung einen Prozessor und einen Speicher aufweisen, wobei im Speicher ein Softwareprogramm gespeichert ist, das bei Ausführung auf dem Prozessor Ausgangssignale der NC-Steuerung erzeugt, die die zusätzliche Relativbewegung (Mikrobewegung) repräsentieren.

Das Abrichtwerkzeug ist in einem Abrichtverfahren der vorstehend genannten Art vorzugsweise mit Hartstoffkörnern belegt und ist von einem (gerad- oder schrägverzahnten) Zahnrad mit einer Auslegungszähnezahl z abgeleitet, wobei auf dem Zahnrad eine gegenüber der Auslegungszähnezahl z reduzierte Zahl von Zähnen vorhanden ist und wobei jeweils zwischen zwei vorhandenen Zähnen mindestens ein Zahn ausgespart ist.

Um gleichzeitig mit den Flanken auch den Aussendurchmesser und/oder den Ganggrund der Schleifschnecke abrichten zu können, kann das Abrichtwerkzeug mit Hartstoffkörnern belegte Zonen für ein Überdrehen eines Schleifschnecken-Aussendurchmessers und/oder für ein Einstechen eines Schleifschnecken-Ganggrundes aufweisen. Bei geeigneter Wahl der Durchmesser für diese beiden Abrichtzonen ergibt sich der nicht zu unterschätzende Vorteil dieses Verfahrens, dass der Aussendurchmesser der Schleifschnecke bzw. die Profilhöhe des Schneckenganges in gewissen Grenzen unabhängig von allen übrigen Profilmerkmalen frei wählbar bzw. einstellbar ist.

Zwischen zwei vorhandenen Zähnen kann jeweils immer die gleiche Zahl von Zähnen ausgespart sein. In vielen Fällen wird eine Zahl von zwei oder drei ausgesparten Zähnen sinnvoll sein. Es ist aber auch denkbar, dass eine grössere Zahl von Zähnen, z.B. vier, fünf oder sechs Zähne, ausgespart sind. Ein Abrichtwerkzeug, bei dem immer jeweils zwei Zähne ausgespart sind, wäre allerdings für das Abrichten von Schleifschneckengangzahlen, die durch drei teilbar sind, aus leicht einsehbaren Gründen nur eingeschränkt brauchbar, weil damit in jedem Durchgang nur ein Schneckengang abgerichtet werden könnte. Stattdessen kann die Verteilung der stehengebliebenen Zähne am Umfang aber auch anders gewählt werden. Eine regelmässige Teilung ist dabei keine Bedingung, d.h. es ist z.B. möglich, jeweils zwei, dann drei, dann wieder zwei etc. Zähne zwischen zwei stehengebliebenen Zähnen auszusetzen. Die Software für die Steuerung der Mikrobewegung wird dann entsprechend auf die Teilung der aktiven Zähne angepasst.

Die vorhandenen Zähne können eine Flankenform aufweisen, die einer unmodifizierten oder einer modifizierten Flankenform für eine vorgegebene Verzahnungsart bei der Auslegungszähnezahl z entspricht. Falls es sich beispielsweise bei der zu fertigenden Verzahnung um eine modifizierte Evolventenverzahnung handelt, weisen die vorhandenen Zähne vorzugsweise eine Evolventenform auf. Wenn die Flankenform der vorhandenen Zähne am Abrichtwerkzeug selbst schon modifiziert ist, kann die Schleifschnecke zum Schleifen von Zahnrädern mit ähnlich modifizierten Flanken unter Umständen wesentlich schneller abgerichtet werden, weil dann die erforderlichen Zusatzdrehbewegungen möglicherweise viel kleiner ausfallen können.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Skizze zur Illustration des Eingriffs einer evolventischen Zahnflanke mit einer modifizierten Schneckenflanke;
- Fig. 2: eine Darstellung einer Berührspur auf einer Schleifschneckenflanke;
- Fig. 3: ein schematisches Weg-Zeit-Diagramm einer Mikrobewegung;
- Fig. 4: ein schematisches Geschwindigkeits-Zeit-Diagramm der Mikrobewegung der Fig. 3;
- Fig. 5: den Aufbau einer Werkzeugmaschine zum kontinuierlichen Wälzschleifen in schematischer Darstellung;
- Fig. 6: eine schematische Schnittdarstellung durch eine Abrichtvorrichtung zur Erzeugung von Mikrodrehbewegungen;
- Fig. 7: ein Beispiel einer Abrichtvorrichtung zum Aufspannen auf die Werkstückspindel;
- Fig. 8: ein erstes Beispiel eines Abrichtwerkzeugs mit regelmässiger Verteilung der aktiven Zähne; und
- Fig. 9: ein zweites Beispiel eines Abrichtwerkzeugs mit unregelmässiger Verteilung der aktiven Zähne.

### BESCHREIBUNG BEVORZUGTER AUSFÜHRUNGSFORMEN

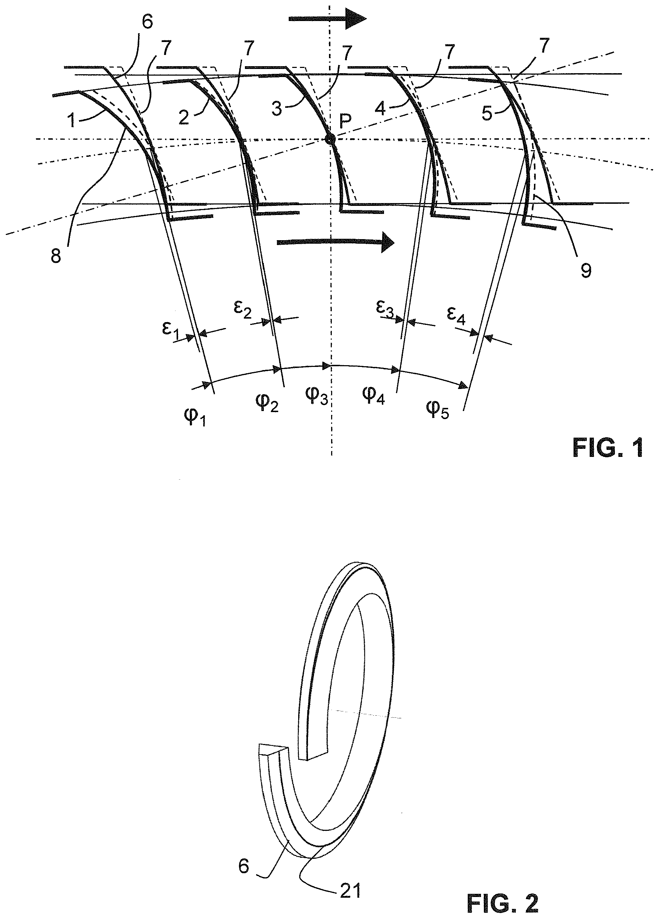

In der Fig. 1 ist der Eingriff einer einzelnen, nicht modifizierten Zahnflanke 8 eines zahnradartigen Abrichtwerkzeugs beim Wälzen mit einer modifizierten Schleifschneckenflanke 6 im Achsschnitt der Schnecke illustriert, wobei die Schnecke für das Schleifen einer höhenballigen Verzahnung abgerichtet ist. Für das Beispiel ist eine willkürliche Form der Höhenballigkeit angenommen; für jede andere Art der Modifikation sind die Verhältnisse jedoch prinzipiell ähnlich. Die Zahnflanke 8 des Abrichtwerkzeugs ist in verschiedenen Wälzstellungen 1, 2, 3, 4 und 5 im Eingriff mit der modifizierten Schneckenflanke 6 dargestellt. Die dünn gestrichelt gezeichnete Linie zeigt zum Vergleich eine nicht modifizierte Schneckenflanke 7. Die ebenfalls dünn gestrichelte Linie 9 gibt die jeweilige Position an, die die Zahnflanke 8 einnehmen würde, wenn sie mit einer nicht modifizierten Schnecke zusammenlaufen würde. Die Linie 9 zeigt also die gemäss Verzahnungsgesetz jeweilige theoretisch korrekte Lage der Zahnflanke an. Der besseren Sichtbarkeit des Vorganges wegen ist die Modifikation der Schneckenflanke stark überhöht dargestellt. Wenn sich die Schnecke dreht, bewegt sich die Schneckenflanke 6 von links nach rechts; das kämmende Abrichtwerkzeug mit dem einzelnen Zahn dreht folglich im Uhrzeigersinn von Wälzstellung 1 bis Wälzstellung 5 und nimmt dabei Wälzwinkel ϕ₁, ϕ₂, ϕ₃, ϕ₄ und ϕ₅ ein.

Im vorliegenden Beispiel hinkt der Drehwinkel der Zahnflanke 8 zu Beginn des Eingriffs bei Wälzwinkel ϕ₁ der theoretisch richtigen Lage um eine Drehwinkelabweichung ε₁ nach. Dies kann auch als "Nachlauf" bezeichnet werden. Beim Weiterwälzen - in der zweiten Position beim Wälzwinkel ϕ₂ - verringert sich dieser Nachlauf auf ε₂ und etwa im Wälzpunkt P bei ϕ₃ (die genaue Lage ist abhängig von der Modifikation auf der Schneckenflanke) verschwindet er ganz. Im weiteren Verlauf bis ϕ₄ nimmt die Drehwinkelabweichung wieder zu auf ε₃, und ganz am Ende des Eingriffes beim Wälzwinkel ϕ₅ wächst sie an auf ε₄. Dieser Nachlauf bzw. allgemeiner der Verlauf der Drehwinkelabweichungen (ε-Werte) über dem Wälzweg ist also ein Abbild der Modifikation auf der Schneckenflanke an der betrachteten Shiftposition. Es ist auch leicht zu sehen, dass diese Art von Wälzen nur möglich ist, wenn keine unmittelbar nachfolgenden oder vorauseilenden Flanken vorhanden sind, da diese unter Umständen verhindern würden, dass ein Flankenkontakt im Bereich um den Wälzpunkt P stattfindet.

Wie aus der Fig. 1 erkennbar ist, besteht zwischen der Verzahnung des Abrichtwerkzeugs und der Schleifschneckenflanke in der Regel nur Punktkontakt. Durch die Wälzbewegung wird somit eine Berührspur des Abrichtwerkzeugs auf der Schneckenflanke 6 erzeugt. Die Fig. 2 illustriert einen Teil einer solchen Berührspur 21. Die Berührspur 21 verläuft über ca. zwei Gangteilungen spiralförmig vom Kopf zum Fuss über die Flanke. In der Fig. 2 ist nur die erste Gangteilung dargestellt. Diese Spiralform der Berührspur 21 ist beinahe unabhängig von der Geometrie der Verzahnung des Abrichtwerkzeugs.

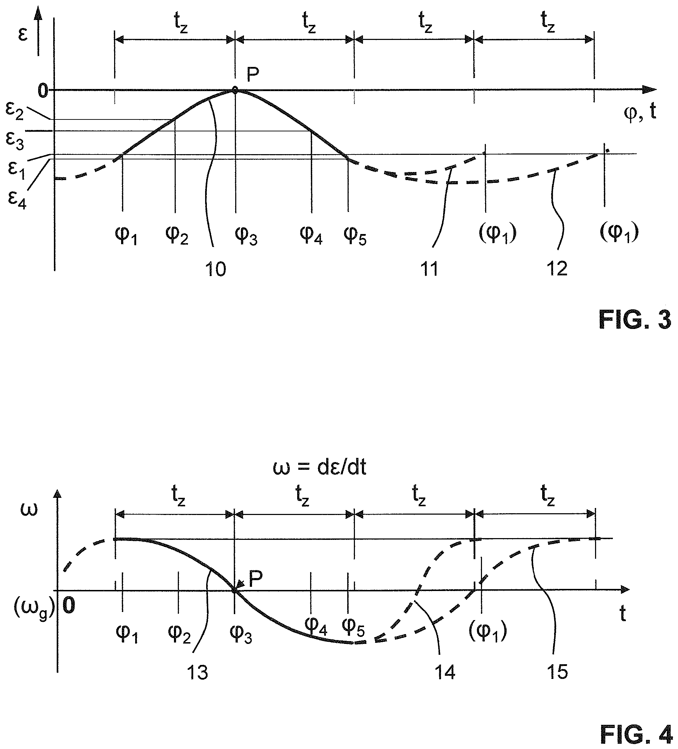

In Fig. 3 ist der Verlauf der Drehwinkelabweichung ε des Abrichtwerkzeugs über dem Wälzwinkel ϕ aufgezeichnet. Die oben erwähnten Wälzwinkel ϕ₁ bis ϕ₅ sind im Diagramm ebenfalls eingetragen. Geht man davon aus, dass die Grunddrehzahl *n*_{g} konstant ist, dann kann als Abszisse auch die Zeitachse *t* verwendet werden. In diesem Fall bezeichnen die Angaben ϕ₁ bis ϕ₅ die Zeitpunkte, zu denen die entsprechenden Wälzwinkel eingenommen werden. Für die rein geometrische Betrachtung ist die Abhängigkeit vom Wälzwinkel ϕ geeigneter, für die Analyse der Kinematik ist jedoch die Zeit *t* zweckmässiger. Das Diagramm stellt somit den Verlauf einer Zusatzdrehbewegung ("Mikrobewegung") des Abrichtwerkzeugs dar, die der Grunddrehbewegung überlagert ist.

Im Diagramm ist die Zeit, die für das Durchwälzen einer Zahnteilung benötigt wird, mit *t*_{z} eingetragen. Die ausgezogene Linie 10 stellt das Stück der Mikrobewegungsfunktion dar, welches durch die Geometrie der Schneckenflanken-Modifikation während der Dauer des Eingriffes gegeben ist. Der Vergleich zwischen der Zeit *t*_{z} für das Durchwälzen einer Zahnteilung und der Eingriffsdauer zeigt, dass der Überdeckungsgrad bei diesem Beispiel knapp 2 ist. Nur im Punkt P, d.h. in der Nähe des Wälzpunktes, ist die Drehwinkelabweichung Null; an allen übrigen Stellen hinkt der Drehwinkel des Abrichtwerkzeugs der Position nach, welche das Abrichtwerkzeug beim Wälzen mit einer nicht modifizierten Schnecke haben würde.

Nach dem Auslaufen der betrachteten Flanke bei ϕ₅ wird dafür gesorgt, dass die nächste zum Durchwälzen ankommende Flanke so positioniert wird, dass sie bei ϕ₁ mit der Abweichung ε₁ wieder richtig einläuft. Dazu dient eine Übergangsfunktion, die in der Fig. 2 gestrichelt dargestellt ist. Die Übergangsfunktion 11 ist geeignet, falls zwischen den aktiven Zähnen jeweils zwei Zähne ausgespart sind. Die Übergangsfunktion 12 ist dagegen geeignet, wenn drei Zähne ausgespart sind. Der genaue Verlauf der Übergangsfunktion zwischen ϕ₅ und ϕ₁ spielt im Prinzip keine Rolle, da sich die Zahnflanken ja ausserhalb des Eingriffes befinden. Zweckmässigerweise wird man sie aber so festlegen, dass die Beschleunigungen minimal bleiben; d.h. die zweite Ableitung der Übergangsfunktion nach der Zeit (mathematisch ausgedrückt, *d²*ε/*dt*²) sollte betragsmässig möglichst klein bleiben. Dazu sollte die Übergangsfunktion stetig differenzierbar gewählt werden. Dort wo drei Zähne ausgespart sind, verläuft die Übergangsfunktion über ca. zwei Zahnteilungen; ihr Verlauf kann deshalb naturgemäss einiges sanfter sein.

Fig. 4 zeigt den Geschwindigkeitsverlauf der "Mikrobewegungsfunktion", den man erhält, wenn der Wegverlauf der Fig. 3 nach der Zeit t abgeleitet wird. Die durchgezogene Linie 13 stellt den Verlauf der Geschwindigkeit in der Wälzzone dar, die gestrichelt gezeichneten Linien 14 und 15 stellen die zwei Übergangsfunktionen dar, wieder jeweils für den Fall, dass zwei oder drei Zähne ausgesetzt sind.

Wenn man die Grunddrehung der Wälzbewegung mitberücksichtigt, verschiebt sich diese Funktion um die Winkelgeschwindigkeit ω_{g} der Grunddrehung nach oben, wobei sich diese Winkelgeschwindigkeit aus der Winkelgeschwindigkeit ωₛ der Schnecke, der Gangzahl g der Schnecke, der Auslegungszähnezahl z für das Abrichtzahnrad und der Shiftgeschwindigkeit *v*_{y} ergibt. Betrachtet man aber nur die überlagerte Mikrobewegung, dann schneidet die t-Achse die Ordinate bei ω = 0.

Die bereits oben erwähnte jeweilige Übergangsfunktion wird so festgelegt, dass die Geschwindigkeit beim Eintritt der nächsten Flanke bei ϕ₁ in die Wälzzone mit der dort benötigten geometrieerzeugenden Winkelgeschwindigkeit für die Mikrobewegung übereinstimmt.

Wie aus den Figuren 3 und 4 ersichtlich, ergibt sich für Weg und Geschwindigkeit der Mikrobewegung ein annähernd periodischer Verlauf, der im vorliegenden Beispiel ähnlich einer Sinusfunktion ist. Das zeitliche Mittel der Geschwindigkeit der Mikrobewegung über eine Periode (und damit auch das zeitliche Mittel über den gesamten Abrichtvorgang) ist nahezu Null. Anders geartete Modifikationen an den Schleifschneckenflanken ergeben natürlich etwas andere Verläufe; jedoch ist der Grundcharakter der Funktionen immer etwa gleich. Die Grundfrequenz der Mikrobewegung ist dabei abhängig von der jeweiligen Anzahl der ausgesetzten Zähne am Abrichtwerkzeug: ist jeder dritte Zahn vorhanden, ist sie ein Drittel der Zahnfrequenz *f*_{z}= 1/*t*_{z}; wenn nur jeder vierte Zahn vorhanden ist, beträgt sie ein Viertel von *f*_{z} etc. Dabei gilt numerisch für die Zahnfrequenz in Hz: *f_{z}*[Hz] = *nₛ*[1/min] · *g*/60, wobei *nₛ* die Schleifschneckendrehzahl in Umdrehungen pro Minute und g die Schneckengangzahl bezeichnet.

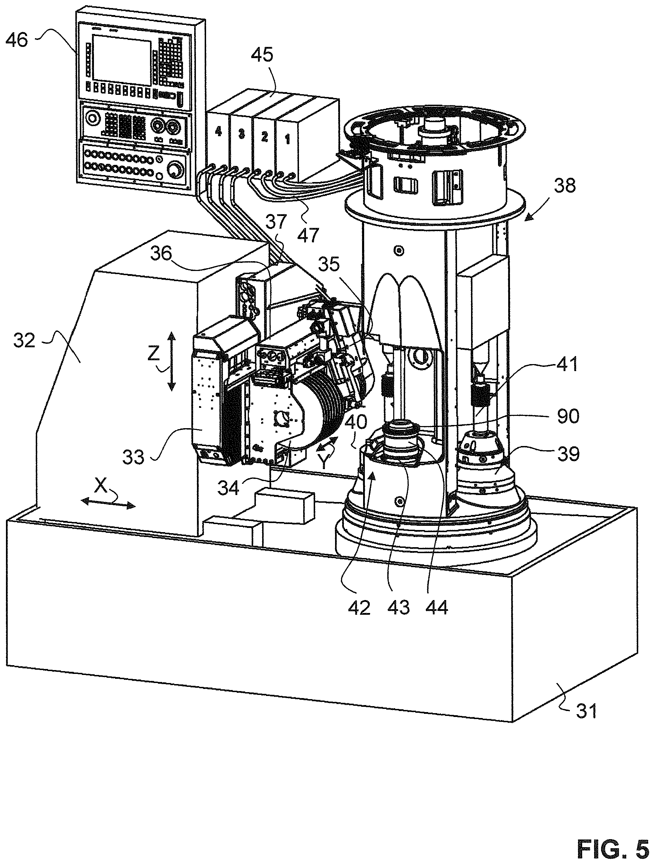

Die Grunddrehbewegung und die überlagerte Mikrobewegung können durch eine gemeinsame Antriebseinheit oder jeweils durch separate Antriebseinheiten erzeugt werden. Dies wird nachstehend unter Bezugnahme auf die Figuren 5-7 näher erläutert.

Die Fig. 5 zeigt beispielhaft eine Wälzschleifmaschine, die speziell für die Ausführung des vorstehend erläuterten Verfahrens ausgestaltet ist.

Die Maschine weist ein Maschinenbett 31 mit einem horizontal (in X-Richtung) verschiebbaren Werkzeugträger 32 auf. An diesem Werkzeugträger 32 ist weiterhin ein vertikal (in Z-Richtung) verschiebbarer Schlitten montiert, an dem ein Schleifkopf 33 mit einem in Y-Richtung verschiebbaren Shiftschlitten 36 und einer darauf drehbar angebrachten Schleifschnecke 34 angebracht ist. Die Schleifschnecke 34 wird von einem elektrischen Antriebsmotor 35 zu einer Drehung angetrieben. Mittels des Shiftschlittens 36 kann die Schleifschnecke 34 entlang ihrer Achse im Betrieb vershiftet werden. Dazu weist der Shiftschlitten einen elektromotorischen Shiftantrieb 37 auf. Der Schleifkopf 33 ist gegenüber dem Werkzeugträger 32 um eine zur X-Richtung parallele Achse verschwenkbar. Das Koordinatensystem X-Y-Z ist hier nicht orthogonal, denn die Y-Achse steht nicht senkrecht zur Z-Achse, sondern ist um den (individuell einstellbaren) Schrägungswinkel geneigt dazu; es kann aber auch eine Wälzschleifmaschine mit orthogonalem Koordinatensystem eingesetzt werden.

Auf dem Maschinenbett 31 ist ausserdem ein Werkstückträger 38 in Form eines Drehturms angebracht. Der Werkstückträger trägt zwei elektromotorisch angetriebene Werkstückspindeln 39, 40, auf denen im vorliegenden Beispiel jeweils ein Werkstück 41 in Form einer Stirnradwelle zur Bearbeitung aufgespannt ist. Die eine Werkstückspindel 40 befindet sich im vorliegenden Beispiel in einer Bearbeitungsposition, in der das zugeordnete Werkstück von der Schleifschnecke 34 bearbeitet werden kann. Die andere Werkstückspindel 39 befindet sich in einer Be- und Entladeposition, in der ein fertig bearbeitetes Werkstück entnommen und ein neues zu bearbeitendes Werkstück aufgespannt werden kann. In einem Winkel (hier 90°) zu den Werkstückspindeln versetzt ist auf dem Werkstückträger 38 eine Abrichteinheit 42 angeordnet. Durch Drehung des Werkstückträgers 38 wird diese Abrichteinheit in die Bearbeitungsposition gebracht, um die Schleifschnecke 34 abzurichten.

Die Abrichteinheit 42 umfasst zwei Antriebe: einen (in Fig. 5 nur teilweise sichtbaren) Grundantrieb 43 und einen Zusatzantrieb 44, der auf der Spindel des Grundantriebs 43 montiert ist, um einer vom Grundantrieb 43 erzeugten Grunddrehbewegung schnelle Zusatzdrehbewegungen (Mikrobewegungen) zu überlagern. Auf der Spindel des Zusatzantriebs 44 ist ein zahnradartiges Abrichtwerkzeug 90 aufgespannt.

Die verschiedenen Antriebe der Wälzschleifmaschine werden von einer NC-Steuerungseinheit 45 angesteuert. Eine CNC-Bedieneinheit 46 dient dazu, die NC-Steuerungseinheit zu bedienen. Im vorliegenden Beispiel sind lediglich vier NC-Module der NC-Steuerungseinheit 45 dargestellt. Die ersten beiden Module steuern den Grundantrieb 43 und den Zusatzantrieb 44 der Abrichteinheit 42 an. Die anderen beiden Module steuern die Antriebsmotoren 35 der Schleifschnecke 34 und des Shiftantriebs 37 zur Verschiebung des Shiftschlittens 36 an. Weitere, nicht dargestellte NC-Module dienen zur Steuerung der weiteren Antriebe. Zuführleitungen 47 verbinden die NC-Module mit den verschiedenen Antrieben. Die NC-Steuerungseinheit 45 führt eine Software zur Ansteuerung der Antriebe aus.

Beim Abrichten erzeugt der Grundantrieb 43, abhängig von den für den Abrichtprozess massgebenden Parametern wie Schleifschneckendrehzahl *nₛ*, Schneckengangzahl *g*, Auslegungszähnezahl *z* des Abrichtwerkzeuges und Shiftgeschwindigkeit *v_{y}*, die Grunddrehzahl für das Abrichtwerkzeug 90. Der Zusatzantrieb 44 überlagert dieser Grunddrehzahl, gesteuert von der Software, schnelle Zusatzdrehbewegungen.

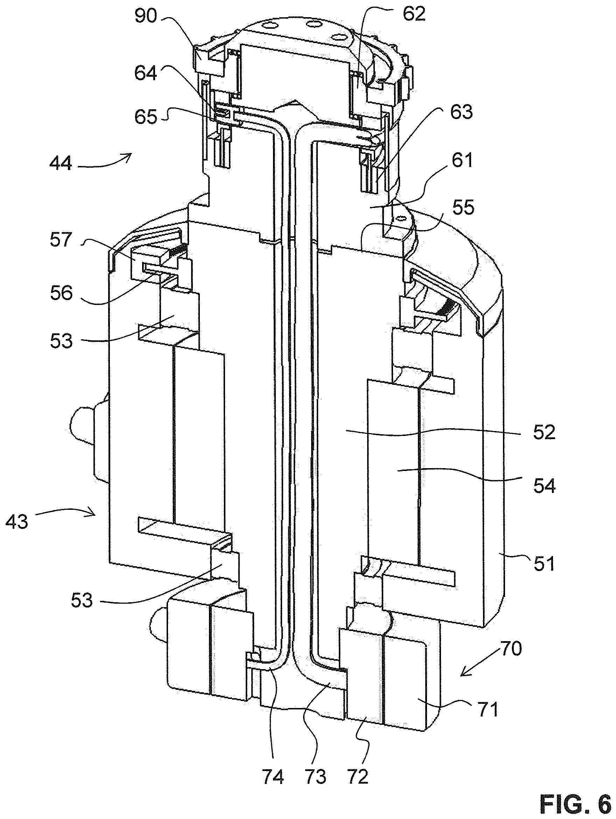

In der Fig. 6 ist eine mögliche Ausführungsform des Grundantriebs 43 und des Zusatzantriebs 44 im Achsschnitt dargestellt. Der Grundantrieb 43 ist in bekannter Weise aufgebaut und umfasst ein Gehäuse 51, eine Hauptspindel 52, Spindellager 53 und einen Antriebsmotor 54. Nahe dem oberen Spindelende 55 ist ein Drehwinkel-Messsystem angeordnet, mit einer Messscheibe 56 und einem Lesekopf 57. Auf dem oberen Spindelende 55 ist der Zusatzantrieb 44 aufgesetzt. Dieser umfasst alle notwendigen Elemente für eine Hochgenauigkeits-NC-Achse: ein Gehäuse 61, eine (hier ringförmige) Spindel 62, einen (hier ebenfalls ringförmigen) Antriebsmotor 63 und ein Messsystem mit einer Messscheibe 64 und einem Lesekopf 65. Damit der mit der Hauptspindel rotierende Motor 63 und der Lesekopf 65 des Messsystems mit Strom versorgt werden können, ist eine Dreheinführung 70 mit Stator 71 und Rotor 72 vorgesehen, welche sich am unteren Ende der Hauptspindel befindet. Zuführleitungen von der und zur NC-Steuerungseinheit sind mit dem Stator 71 der Dreheinführung 72 verbunden. Über Schleifringe oder induktiv (mittels zweier konzentrischer Spulen im Stator 71 und Rotor 72) und ggfs. optisch erfolgt die Übertragung von Energie und Daten zwischen dem Stator 71 und dem Rotor 72. Vom Rotor 72 zum Zusatzantrieb 44 erfolgt die Stromführung durch die Hauptspindel 52 hindurch über ein Leistungskabel 73 und eine Messleitung 74.

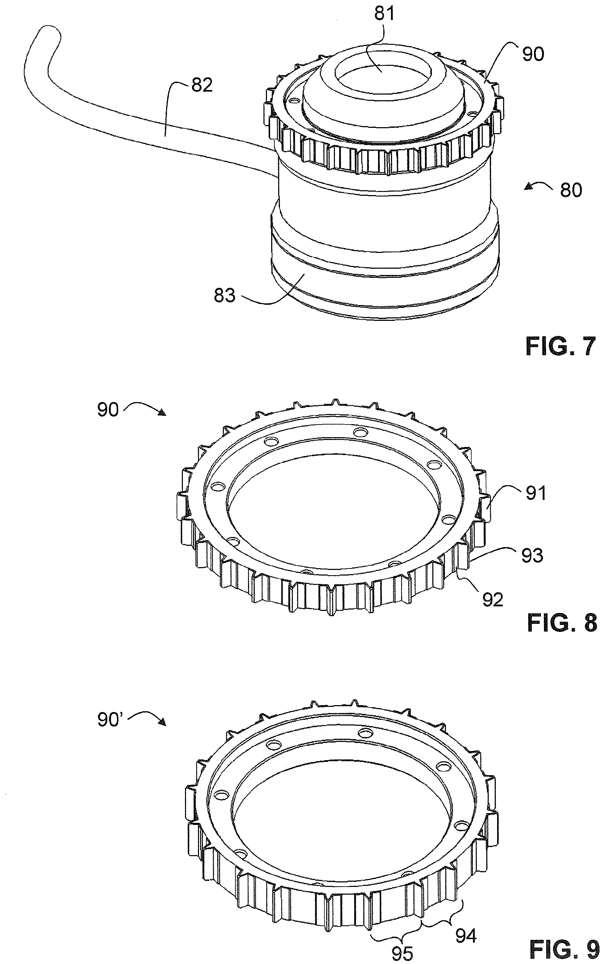

Die Fig. 7 zeigt ein Beispiel einer Abrichtvorrichtung, die sich für das Aufspannen auf der Werkstückspindel einer Wälzschleifmaschine eignet, die mechanisch nicht speziell für das hier beschriebene neuartige Abrichtverfahren vorbereitet ist. Diese Abrichtvorrichtung stellt einen Zusatzantrieb für die Werkstückspindel zur Verfügung, um schnelle Zusatzdrehbewegungen zur Grunddrehbewegung der Werkstückspindel zu erzeugen. Die Abrichtvorrichtung 80 wird zum Abrichten mit Hilfe der Aufspannbohrung 81 auf der Werkstückspindel zentriert und festgeklemmt. Über ein Verbindungskabel 82 (nur schematisch gezeichnet) für die Stromversorgung und für Messdaten und eine Dreheinführung 83 erfolgen sowohl die Energiezuführung als auch der Datenaustausch mit der NC-Steuerung. Die Vorrichtung beinhaltet einen Zusatzantrieb der vorstehend beschriebenen Art und ein Messsystem. Auf der Abrichtvorrichtung ist das Abrichtwerkzeug 90 aufgespannt. Es ist leicht auswechselbar z.B. nach Erreichen des Standzeitendes oder wenn umgerüstet werden soll auf ein Werkstück mit anderen Verzahnungsdaten.

Die Abrichtvorrichtung der Fig. 7 lässt sich im Unterschied zu der in Fig. 6 gezeigten Variante auch auf Maschinen einsetzen, die mechanisch primär für ein anderes Abrichtverfahren gebaut wurden und deshalb keine separate Abrichtspindel bzw. keine Dreheinführung an der Werkstückspindel haben.

Die Fig. 8 zeigt ein Beispiel eines erfindungsgemässen Abrichtwerkzeuges 90, bei dem zwischen zwei stehengebliebenen Zähnen 91 jeweils zwei Zähne ausgesetzt sind. Die stehengebliebenen Zähne sind mit einer Schicht aus Hartstoffkörnern, z.B. Diamantkörnern, belegt; ausserdem ist ihre Zahndicke etwas verringert, damit es beim Abrichten keinen Zweiflankenkontakt mit den Schleifschneckenflanken geben kann. Neben den Zahnflanken sind auch Partien 92 am Zahngrund für das Überdrehen des Schleifschnecken-Aussendurchmessers und am Zahnkopf 93 für das Einstechen des Schneckenganggrundes mit Hartstoffkörnern belegt.

Dieses Beispiel zeigt ein geradverzahntes Abrichtwerkzeug; jedoch kann dieses auch schrägverzahnt links oder rechtssteigend sein, sofern die Bedingung, dass nie zwei Flanken gleichzeitig Kontakt mit den Schneckenflanken haben, eingehalten wird.

In der Beschreibung des Verfahrens ist für das Abrichtwerkzeug ein unmodifiziertes Evolventenzahnrad angenommen. Das ist aber keine Bedingung; genauso gut funktioniert eine ballige oder sonst irgendwie modifizierte Verzahnung auf dem Abrichtwerkzeug.

Mit dem Abrichtwerkzeug in Fig. 8 lässt sich eine Schleifschnecke, deren Gangzahl durch drei teilbar ist, ohne Teiloperation nicht abrichten. Für diese Fälle braucht es entweder ein Werkzeug, bei dem jeweils drei Zähne ausgesetzt sind oder bei dem die aktiven Zähne eine unregelmässige Verteilung über dem Umfang haben. So können z.B. zwei, dann drei, dann wieder zwei usw. Zähne ausgesetzt sein. Die Software für die Steuerung der Mikrobewegung wird dann auf die unregelmässige Teilung abgestimmt. Insbesondere sollten softwaremässig die unterschiedlichen Übergangsfunktionen der Drehlage des Werkzeuges richtig zugeordnet sein. Von solchen unregelmässigen Teilungen sind viele denkbar, und es ist jeweils zu prüfen, wie gut sich ein bestimmtes Verteilungsmuster für die abzurichtende Gangzahl eignet. Grundsätzlich gilt: je höher der Prozentsatz der aktiven Zähne an der Auslegungszähnezahl z, umso effizienter ist das Abrichten.

Die Fig. 9 zeigt ein Beispiel eines Abrichtwerkzeuges 90' mit nicht gleichmässiger Verteilung der aktiven Zähne. Im Bereich 94 sind zwei Zähne ausgesetzt, im Bereich 95 dann drei Zähne, dann wieder zwei Zähne usw. Die Basisteilung ist also sieben Zähne; für 7-, 14-, 21-....gängige Schleifschnecken ist diese Version deshalb nicht geeignet. Damit sich für dieses Beispiel das Muster für die Position der aktiven Zähne regelmässig über dem Umfang verteilen lässt, muss die Auslegungszähnezahl z durch sieben teilbar sein.

Bei der obigen Beschreibung des Verfahrens und des Abrichtwerkzeugs wird davon ausgegangen, dass es sich bei der Verzahnung des Abrichtwerkzeugs um eine Evolventenverzahnung handelt. Dies in erster Linie deshalb, weil diese Art der Verzahnung in der Getriebetechnik mit Abstand am weitesten verbreitet ist und am meisten Verwendung findet, aber auch, weil hier die Zusammenhänge besonders gut vorstellbar und einleuchtend sind. Grundsätzlich ist das Verfahren aber in allen Fällen einsetzbar, in denen Schleifschnecken für das kontinuierliche Wälzschleifen abzurichten sind, also auch für jede andere wälzbare Verzahnung.

Im Weiteren ist es, wie bereits oben erwähnt, nicht Bedingung, dass z.B. im Fall eines Abrichtwerkzeuges mit Evolventenverzahnung dessen Zahnflanken reine Evolventen, d.h. völlig unmodifiziert sind. Da die meisten heute geschliffenen Verzahnungen in der Regel eine leichte Profilballigkeit aufweisen, kann es sinnvoll sein, am Abrichtwerkzeug ebenfalls eine solche Modifikation anzubringen. In der Wirkung führt das dazu, dass die Mikrobewegungen des Abrichtwerkzeuges beim Abrichten einer Schleifschnecke, die für das Schleifen einer Verzahnung mit Balligkeit vorgesehen ist, insgesamt kleiner ausfallen. Das kann, je nach Antrieb in der Abrichtvorrichtung, eventuell höhere Abrichtgeschwindigkeiten erlauben. Für den Fall, dass solche modifizierten Abrichtwerkzeuge zum Einsatz kommen, wird die tatsächliche Form der Abrichtverzahnung von der Software entsprechend berücksichtigt. Es ist dann für die Berechnung der Mikrobewegung zum Erzeugen der auf der Schleifschneckenflanke verlangten Modifikation nicht deren Differenz zur theoretischen Zahnflankenform, sondern diejenige zur modifizierten Werkzeugflanke zu berücksichtigen.

Während in den vorstehend diskutierten Beispielen jeweils eine Zusatzdrehbewegung des Abrichtwerkzeugs erzeugt wird, ist es alternativ oder zusätzlich auch denkbar, stattdessen eine Zusatzdrehbewegung der Schleifschnecke zu erzeugen. Dies kann durch eine entsprechende Ansteuerung des Schleifschneckenantriebs erreicht werden, oder es kann hierfür ein Zusatzantrieb vorgesehen werden in Analogie zum vorstehend diskutierten Zusatzantrieb für das Abrichtwerkzeug. Alternativ oder zusätzlich kann auch der Shiftbewegung und/oder der X-Bewegung eine lineare Zusatzbewegung überlagert werden. Dies kann durch eine entsprechende Ansteuerung des Antriebs für den Shiftschlitten bzw. die X-Achse erreicht werden, oder es kann hierfür ein entsprechender Zusatzantrieb vorgesehen werden, der kleine schnelle axiale Verschiebungen der Schleifschnecke oder des Abrichtwerkzeugs mit hoher Präzision erzeugen kann.

## Patentansprüche

1. Verfahren zum Abrichten einer ein- oder mehrgängigen Schleifschnecke (34), aufweisend:
Erzeugen einer Grundwälzbewegung zwischen der Schleifschnecke (34) und einem zahnradartigen Abrichtwerkzeug (90, 90`); und
Erzeugen einer zusätzlichen Relativbewegung zwischen der Schleifschnecke (34) und dem Abrichtwerkzeug (90, 90'), wobei die zusätzliche Relativbewegung der Grundwälzbewegung überlagert ist,
wobei das Erzeugen der Grundwälzbewegung umfasst:
Antreiben der Schleifschnecke (34) zu einer Grunddrehbewegung um eine Schleifschneckenachse;
Antreiben des Abrichtwerkzeugs (90, 90') zu einer Grunddrehbewegung um eine Abrichtwerkzeugachse, die gekreuzt zur Schleifschneckenachse verläuft; und
Erzeugen einer Shiftbewegung zwischen Abrichtwerkzeug (90, 90') und Schleifschnecke (34) entlang der Schleifschneckenachse,
wobei die Grunddrehbewegung der Schleifschnecke (34), die Grunddrehbewegung des Abrichtwerkzeugs (90, 90') und die Shiftbewegung derart gekoppelt sind, dass die Schleifschnecke (34) und das Abrichtwerkzeug (90, 90') während des Abrichtens die Grundwälzbewegung ausführen,
**dadurch gekennzeichnet,**
**dass** die zusätzliche Relativbewegung erzeugt wird, um Modifikationen auf mindestens einer Flanke (6) der Schleifschnecke (34) zu erzeugen, und
**dass** der Grunddrehbewegung des Abrichtwerkzeugs (90, 90') eine Zusatzdrehbewegung um die Abrichtwerkzeugachse überlagert wird, um zumindest einen Teil der zusätzlichen Relativbewegung zu erzeugen, und/oder dass der Grunddrehbewegung der Schleifschnecke (34) eine Zusatzdrehbewegung um die Schleifschneckenachse überlagert wird, um zumindest einen Teil der zusätzlichen Relativbewegung zu erzeugen und/oder dass der Shiftbewegung eine axiale Zusatzbewegung zwischen Schleifschnecke (34) und Abrichtwerkzeug (90; 90') entlang der Schleifschneckenachse überlagert wird, um zumindest einen Teil der zusätzlichen Relativbewegung zu erzeugen.

2. Verfahren nach Anspruch 1, **dadurch gekennzeichnet, dass** der Grunddrehbewegung des Abrichtwerkzeugs (90, 90') eine Zusatzdrehbewegung um die Abrichtwerkzeugachse überlagert wird, um zumindest einen Teil der zusätzlichen Relativbewegung zu erzeugen.

3. Verfahren nach Anspruch 2, **dadurch gekennzeichnet, dass** sowohl die Grunddrehbewegung als auch die Zusatzdrehbewegung des Abrichtwerkzeugs (90, 90`) durch einen gemeinsamen Antrieb erzeugt werden.

4. Verfahren nach Anspruch 3, **dadurch gekennzeichnet,**
**dass** das Abrichtwerkzeug (90; 90') anstelle eines Werkstücks auf einer Werkstückspindel (39) mit einem Werkstückspindelantrieb aufgespannt ist, und dass der Werkstückspindelantrieb sowohl die Grunddrehbewegung als auch die Zusatzdrehbewegung des Abrichtwerkzeugs (90, 90`) erzeugt, oder
**dass** das Abrichtwerkzeug (90; 90') auf einer separaten Abrichtspindel mit einem Abrichtspindelantrieb aufgespannt ist, und dass der Abrichtspindelantrieb sowohl die Grunddrehbewegung als auch die Zusatzdrehbewegung des Abrichtwerkzeugs (90, 90') erzeugt.

5. Verfahren nach Anspruch 2, **dadurch gekennzeichnet, dass** die Grunddrehbewegung und die Zusatzdrehbewegung des Abrichtwerkzeugs (90, 90') von separaten Antrieben erzeugt werden.

6. Verfahren nach Anspruch 5, **dadurch gekennzeichnet, dass** das Abrichtwerkzeug (90, 90') auf einer Spindel eines Zusatzantriebs (44; 80) aufgespannt ist, dass der Zusatzantrieb (44; 80) auf einer Werkstück- oder Abrichtspindel (52) aufgespannt ist, dass die Werkstück- oder Abrichtspindel (52) die Grunddrehbewegung des Abrichtwerkzeugs (90, 90') erzeugt und dass der Zusatzantrieb (44; 80) die Zusatzdrehbewegung des Abrichtwerkzeugs (90, 90') erzeugt, wobei der Zusatzantrieb (44; 80) derart an der Werkstück- oder Abrichtspindel (52) angebracht ist, dass sich der Zusatzantrieb (44; 80) mit der Grunddrehbewegung mitdreht.

7. Verfahren nach einem der vorhergehenden Ansprüche, **dadurch gekennzeichnet, dass** das Abrichtwerkzeug (90; 90') auf seinem Aussenumfang einen oder mehrere Zähne (91) aufweist, wobei die Zähne (91) eine Zahndicke in Umfangsrichtung und einen Zahnabstand (94, 95) in Umfangsrichtung haben, die so gewählt sind, dass sich das Abrichtwerkzeug (90; 90') und die Schleifschnecke (34) zu jedem Zeitpunkt des Abrichtens an höchstens einem einzigen Kontaktpunkt berühren.

8. Verfahren nach Anspruch 7, **dadurch gekennzeichnet, dass** das Abrichtwerkzeug (90; 90') von einem Zahnrad mit einer Auslegungszähnezahl z abgeleitet ist, wobei auf dem Zahnrad eine gegenüber der Auslegungszähnezahl z reduzierte Zahl von Zähnen (91) vorhanden ist und wobei jeweils zwischen zwei vorhandenen Zähnen (91) mindestens ein Zahn ausgespart ist.

9. Werkzeugmaschine, aufweisend:
eine Schleifschnecke (34);
einen Schleifschneckenantrieb (35) zur Erzeugung einer Grunddrehbewegung der Schleifschnecke (34) um eine Schleifschneckenachse;
ein zahnradartiges Abrichtwerkzeug (90, 90`);
eine Werkstück- oder Abrichtspindel zur Erzeugung einer Grunddrehbewegung des Abrichtwerkzeugs (90, 90') um eine Werkstück- oder Abrichtspindelachse, wobei die Werkstück- oder Abrichtspindelachse gekreuzt zur Schleifschneckenachse verläuft;
einen Shiftantrieb (37), um die Schleifschnecke (34) und die Werkstückoder Abrichtspindel relativ zueinander entlang der Schleifschneckenachse zu verschieben;
eine horizontale Zustelleinrichtung (32), um die Schleifschnecke (34) und das Abrichtwerkzeug (90, 90') aufeinander zu und voneinander weg zu bewegen; und
eine NC-Steuerung (45), die dazu ausgebildet ist, den Schleifschneckenantrieb (35), die Werkstück- oder Abrichtspindel und den Shiftantrieb (37) elektronisch zu koppeln, um während des Abrichtens eine Grundwälzbewegung zwischen der Schleifschnecke (34) und dem Abrichtwerkzeug (90, 90`) zu erzeugen,
**dadurch gekennzeichnet,**
**dass** die NC-Steuerung (45) dazu ausgebildet ist, die Werkstück- oder Abrichtspindel, den Schleifschneckenantrieb (35) und/oder den Shiftantrieb (37) zusätzlich derart anzusteuern, dass der Grundwälzbewegung eine zusätzliche Relativbewegung überlagert wird, um zusätzliche Modifikationen mindestens einer Flanke (6) der Schleifschnecke (34) zu erzeugen,
indem der Grunddrehbewegung des Abrichtwerkzeugs (90, 90') eine Zusatzdrehbewegung um die Abrichtwerkzeugachse überlagert wird, um zumindest einen Teil der zusätzlichen Relativbewegung zu erzeugen, und/oder
indem der Grunddrehbewegung der Schleifschnecke (34) eine Zusatzdrehbewegung um die Schleifschneckenachse überlagert wird, um zumindest einen Teil der zusätzlichen Relativbewegung zu erzeugen, und/oder
indem der Shiftbewegung eine axiale Zusatzbewegung zwischen Schleifschnecke (34) und Abrichtwerkzeug (90; 90') entlang der Schleifschneckenachse überlagert wird, um zumindest einen Teil der zusätzlichen Relativbewegung zu erzeugen.

10. Werkzeugmaschine, aufweisend:
eine Schleifschnecke (34);
einen Schleifschneckenantrieb (35) zur Erzeugung einer Grunddrehbewegung der Schleifschnecke (34) um eine Schleifschneckenachse;
ein zahnradartiges Abrichtwerkzeug (90, 90`);
eine Werkstück- oder Abrichtspindel zur Erzeugung einer Grunddrehbewegung des Abrichtwerkzeugs (90, 90') um eine Werkstück- oder Abrichtspindelachse, wobei die Werkstück- oder Abrichtspindelachse gekreuzt zur Schleifschneckenachse verläuft;
einen Shiftantrieb (37), um die Schleifschnecke (34) und die Werkstückoder Abrichtspindel relativ zueinander entlang der Schleifschneckenachse zu verschieben;
eine horizontale Zustelleinrichtung (32), um die Schleifschnecke (34) und das Abrichtwerkzeug (90, 90') aufeinander zu und voneinander weg zu bewegen; und
eine NC-Steuerung (45), die dazu ausgebildet ist, den Schleifschneckenantrieb (35), die Werkstück- oder Abrichtspindel und den Shiftantrieb elektronisch zu koppeln, um während des Abrichtens eine Grundwälzbewegung zwischen der Schleifschnecke (34) und dem Abrichtwerkzeug (90, 90`) zu erzeugen,
**dadurch gekennzeichnet, dass** die Werkzeugmaschine einen Zusatzantrieb (44; 80) zum Antreiben des Abrichtwerkzeugs (90) aufweist, wobei der Zusatzantrieb (44; 80) derart an der Werkstück- oder Abrichtspindel angebracht ist, dass sich der Zusatzantrieb (44; 80) mit der Grunddrehbewegung mitdreht, wobei das Abrichtwerkzeug (90, 90') auf einer Spindel des Zusatzantriebs (44; 80) aufgespannt ist, und dass die NC-Steuerung (45) dazu ausgebildet ist, den Zusatzantrieb (44; 80) derart anzusteuern, dass er der Grunddrehbewegung des Abrichtwerkzeugs (90, 90') eine Zusatzdrehbewegung um die Werkstück- oder Abrichtspindelachse überlagert, um zusätzliche Modifikationen mindestens einer Flanke (6) der Schleifschnecke (34) zu erzeugen.

11. Werkzeugmaschine nach Anspruch 9 oder 10, wobei das Abrichtwerkzeug (90, 90') mit Hartstoffkörnern belegt ist und von einem Zahnrad mit einer Auslegungszähnezahl z abgeleitet ist, wobei auf dem Zahnrad eine gegenüber der Auslegungszähnezahl z reduzierte Zahl von Zähnen (91) vorhanden ist und wobei jeweils zwischen zwei vorhandenen Zähnen (91) mindestens ein Zahn ausgespart ist, und wobei das Abrichtwerkzeug vorzugsweise am Zahnfuss mit Hartstoffkörnern belegte Zonen (92) für ein Überdrehen eines Schleifschnecken-Aussendurchmessers und/oder am Zahnkopf mit Hartstoffkörnern belegte Zonen (93) für ein Einstechen eines Schleifschnecken-Ganggrundes aufweist.

12. Werkzeugmaschine nach Anspruch 11, **dadurch gekennzeichnet, dass** zwischen zwei vorhandenen Zähnen (91) jeweils die gleiche Zahl von Zähnen ausgespart ist.

13. Werkzeugmaschine nach Anspruch 11, **dadurch gekennzeichnet, dass** über den Umfang des Abrichtwerkzeugs verteilt zwischen den vorhandenen Zähnen (91) nicht jeweils die gleiche Zahl von Zähnen ausgespart ist.

14. Werkzeugmaschine nach Anspruch 11, **dadurch gekennzeichnet, dass** zwischen zwei vorhandenen Zähnen jeweils zwei oder drei Zähne ausgespart sind.

## Claims

1. A method of dressing a single or multi-start grinding worm (34), comprising:
producing a basic rolling movement between the grinding worm (34) and a gear-like dressing tool (90, 90'); and
generating an additional relative movement between the grinding worm (34) and the dressing tool (90, 90'), the additional relative movement being superimposed on the basic rolling movement,
wherein generating the basic rolling movement comprises:
driving the grinding worm (34) to perform a basic rotary movement around a grinding worm axis;
driving the dressing tool (90, 90') to perform a basic rotary movement around a dressing tool axis, which extends crosswise with respect to the grinding worm axis; and
producing a shift movement between the dressing tool (90, 90') and grinding worm (34) along the grinding worm axis,
wherein the basic rotary movement of the grinding worm (34), the basic rotary movement of the dressing tool (90, 90') and the shift movement are coupled in such a way that the grinding worm (34) and the dressing tool (90, 90') perform the basic rolling movement during the dressing process,
**characterized in that**
the additional relative movement is generated to produce modifications on at least one flank (6) of the grinding worm (34), and
**in that** an additional rotary movement about the dressing tool axis is superimposed on the basic rotary movement of the dressing tool (90, 90') in order to produce at least part of the additional relative movement, and/or **in that** an additional rotary movement about the grinding worm axis is superimposed on the basic rotary movement of the grinding worm (34) in order to produce at least part of the additional relative movement, and/or **in that** an additional axial movement between grinding worm (34) and dressing tool (90, 90') along the grinding worm axis is superimposed on the shift movement in order to produce at least part of the additional relative movement.

2. The method as claimed in claim 1, **characterized in that** an additional rotary movement around the dressing tool axis is superimposed on the basic rotary movement of the dressing tool (90,90') in order to produce at least part of the additional relative movement.

3. The method as claimed in claim 2, **characterized in that** both the basic rotary movement and the additional rotary movement of the dressing tool (90, 90') are produced by a common drive.

4. The method as claimed in claim 3, **characterized**
**in that** the dressing tool (90; 90') is clamped instead of a workpiece on a work spindle (39) having a work spindle drive, and in that the work spindle drive produces both the basic rotary movement and the additional rotary movement, or
**in that** the dressing tool (90; 90') is clamped on a separate dressing spindle having a dressing spindle drive, and in that the dressing spindle drive produces both the basic rotary movement and the additional rotary movement of the dressing tool (90, 90').

5. The method as claimed in claim 2, **characterized in that** the basic rotary movement and the additional rotary movement of the dressing tool (90, 90')are produced by separate drives.

6. The method as claimed in claim 5, **characterized in that** the dressing tool (90, 90') is clamped on a spindle of an additional drive (44; 80), **in that** the additional drive (44; 80) is clamped on a work or dressing spindle (52), **in that** the work or dressing spindle (52) produces the basic rotary movement of the dressing tool (90, 90'), the additional drive (44; 80) being attached to the work or dressing spindle (52) in such a way that the additional drive (44; 80) rotates with the basic rotary movement.

7. The method as claimed in any one of the preceding claims, **characterized in that** the dressing tool (90; 90') has one or more teeth (91) on the outer circumference thereof, wherein the teeth (91) have a tooth thickness in the circumferential direction and a tooth pitch (94, 95) in the circumferential direction which are selected in such a way that the dressing tool (90; 90') and the grinding worm (34) make contact at at most a single contact point at any point in time during dressing.

8. The method as claimed in claim 7, **characterized in that** the dressing tool (90; 90') is derived from a gear having a design number of teeth z, wherein there is a reduced number of teeth (91) on the gear relative to the design number of teeth z and wherein at least one tooth is omitted in each case between any two existing teeth (91).

9. A machine tool comprising:
a grinding worm (34);
a grinding worm drive (35) for producing a basic rotary movement of the grinding worm (34) around a grinding worm axis;
a gear-like dressing tool (90,90');
a work or dressing spindle for producing a basic rotary movement of the dressing tool (90,90') around a work or dressing spindle axis, wherein the work or dressing spindle axis extends crosswise with respect to the grinding worm axis;
a shift drive (37) for moving the grinding worm (34) and the work or dressing spindle relative to one another along the grinding worm axis;
a horizontal feed device (32) for moving the grinding worm (34) and the dressing tool (90,90') toward one another and away from one another; and
an NC controller (45), which is configured to electronically couple the grinding worm drive (35), the work or dressing spindle and the shift drive (37) in order to produce a basic rolling movement between the grinding worm (34) and the dressing tool (90,90') during the dressing process,
**characterized in that**
the NC controller (45) is configured to additionally control the work or dressing spindle, the grinding worm drive (35) and/or the shift drive (37) in such a way that an additional relative movement is superimposed on the basic rolling movement in order to produce additional modifications of at least one flank (6) of the grinding worm (34),
by superimposing an additional rotary movement about the dressing tool axis on the basic rotary movement of the dressing tool (90, 90') in order to produce at least part of the additional relative movement, and/or
by superimposing an additional rotary movement about the grinding worm axis on the basic rotatary movement of the grinding worm (34) in order to produce at least part of the additional relative movement, and/or
by superimposing an additional axial movement between the grinding worm (34) and the dressing tool (90; 90') along the grinding worm axis on the shift movement in order to produce at least part of the additional relative movement.

10. A machine tool comprising:
a grinding worm (34);
a grinding worm drive (35) for producing a basic rotary movement of the grinding worm (34) around a grinding worm axis;
a gear-like dressing tool (90,90');
a work or dressing spindle for producing a basic rotary movement of the dressing tool (90,90') around a work or dressing spindle axis, wherein the work or dressing spindle axis extends crosswise with respect to the grinding worm axis;
a shift drive (37) for moving the grinding worm (34) and the work or dressing spindle relative to one another along the grinding worm axis;
a horizontal feed device (32) for moving the grinding worm (34) and the dressing tool (90,90') toward one another and away from one another; and
an NC controller (45), which is configured to electronically couple the grinding worm drive (35), the work or dressing spindle and the shift drive (37) in order to produce a basic rolling movement between the grinding worm (34) and the dressing tool (90,90') during the dressing process,
**characterized in that**
the machine tool comprises an additional drive (44; 80) for driving the dressing tool (90), wherein the additional drive (44; 80) is mounted on the work or dressing spindle in such a way that the additional drive (44; 80) rotates with the basic rotary movement, the dressing tool (90, 90') being clamped on a spindle of the additional drive (44; 80), and **in that** the NC control (45) is configured to control the additional drive (44; 80) in such a way that it superimposes an additional rotary movement around the work or dressing spindle axis on the basic rotatory movement of the dressing tool (90, 90') in order to produce additional modifications of at least one flank (6) of the grinding worm (34).

11. The machine tool as claimed in claim 9 or 10, wherein the dressing tool (90,90') is coated with hard material grains and is derived from a gear having a design number of teeth z, wherein there is a reduced number of teeth (91) on the gear relative to the design number of teeth z and wherein at least one tooth is omitted in each case between two existing teeth (91), and wherein the dressing tool preferably has zones (92, 93) coated with hard material grains at the tooth root for turning a grinding worm outside diameter and/or zones (93) covered with hard material grains at the tooth tip for plunge cutting a grinding worm thread root.

12. The machine tool as claimed in claim 11, **characterized in that** the same number of teeth is omitted in each case between any two existing teeth (91) .

13. The machine tool as claimed in claim 11, **characterized in that** it is not always the same number of teeth which is omitted in each case between the existing teeth (91) as regards distribution around the circumference of the dressing tool.

14. The machine tool as claimed in claim 11, **characterized in that** two or three teeth are in each case omitted between two existing teeth.

## Revendications

1. Procédé de dressage d'une meule mère (34) à un ou plusieurs filets, comprenant:
générer un mouvement de roulement de base entre la meule mère (34) et un outil de dressage de type roue dentée (90, 90'); et
générer un mouvement relatif supplémentaire entre la meule mère (34) et l'outil de dressage (90, 90'), le mouvement relatif supplémentaire étant superposé au mouvement de roulement de base,
dans lequel la génération du mouvement de roulement de base comprend:
entraîner la meule mère (34) en un mouvement de rotation de base autour d'un axe de la meule mère;
entraîner l'outil de dressage (90, 90') en un mouvement de rotation de base autour d'un axe d'outil de dressage qui est croisé avec l'axe de la meule mère; et
générer un mouvement de shifting entre l'outil de dressage (90, 90') et la meule mère (34) le long de l'axe de la meule mère,
dans lequel le mouvement de rotation de base de la meule mère (34), le mouvement de rotation de base de l'outil de dressage (90, 90') et le mouvement de shifting sont couplés de telle sorte que la meule mère (34) et l'outil de dressage (90, 90') exécutent le mouvement de roulement de base pendant le dressage,
**caractérisé en ce que**
le mouvement relatif supplémentaire est généré pour produire des modifications sur au moins un flanc (6) de la meule mère (34), et
**en ce qu'**un mouvement de rotation supplémentaire autour de l'axe de l'outil de dressage est superposé au mouvement de rotation de base de l'outil de dressage (90, 90'), afin de générer au moins une partie du mouvement relatif supplémentaire, et/ou **en ce qu'**un mouvement de rotation supplémentaire autour de l'axe de la meule mère est superposé au mouvement de rotation de base de la meule mère (34), afin de générer au moins une partie du mouvement relatif supplémentaire et/ou **en ce qu'**un mouvement supplémentaire axial entre la meule mère (34) et l'outil de dressage (90; 90') le long de l'axe de la meule mère est superposé au mouvement de shifting afin de générer au moins une partie du mouvement relatif supplémentaire.

2. Procédé selon la revendication 1, **caractérisé en ce qu'**un mouvement de rotation supplémentaire autour de l'axe de l'outil de dressage est superposé au mouvement de rotation de base de l'outil de dressage (90, 90') afin de générer au moins une partie du mouvement relatif supplémentaire.

3. Procédé selon la revendication 2, **caractérisé en ce qu'**aussi bien le mouvement de rotation de base que le mouvement de rotation supplémentaire de l'outil de dressage (90, 90') sont générés par un entrainement commun.

4. Procédé selon la revendication 3, **caractérisé en ce que**
l'outil de dressage (90; 90') est serré à la place d'une pièce à usiner sur une broche porte-pièce (39) avec un entrainement de broche porte-pièce, et **en ce que** l'entrainement de broche porte-pièce génère aussi bien le mouvement de rotation de base que le mouvement de rotation supplémentaire de l'outil de dressage (90, 90'), ou
**en ce que** l'outil de dressage (90; 90') est monté sur une broche de dressage séparée avec un entrainement de broche de dressage, et que l'entrainement de broche de dressage produit aussi bien le mouvement de rotation de base que le mouvement de rotation supplémentaire de l'outil de dressage (90, 90').

5. Procédé selon la revendication 2, **caractérisé en ce que** le mouvement de rotation de base et le mouvement de rotation supplémentaire de l'outil de dressage (90, 90') sont générés par des entraînements séparés.

6. Procédé selon la revendication 5, **caractérisé en ce que** l'outil de dressage (90, 90') est serré sur une broche d'un entrainement supplémentaire (44; 80), **en ce que** l'entrainement supplémentaire (44; 80) est serré sur une broche porte-pièce ou de dressage (52), **en ce que** la broche porte-pièce ou de dressage (52) produit le mouvement de rotation de base de l'outil de dressage (90, 90') et **en ce que** l'entrainement supplémentaire (44; 80) produit le mouvement de rotation supplémentaire de l'outil de dressage (90, 90'), l'entrainement supplémentaire (44; 80) étant monté sur la broche porte-pièce ou la broche de dressage (52) de telle sorte que l'entrainement supplémentaire (44; 80) tourne avec le mouvement de rotation de base.

7. Procédé selon l'une des revendications précédentes, **caractérisé en ce que** l'outil de dressage (90; 90') présente sur sa périphérie extérieure une ou plusieurs dents (91), les dents (91) ayant une épaisseur de dent dans la direction circonférentielle et un écartement de dent (94, 95) dans la direction circonférentielle qui sont choisis de telle sorte que l'outil de dressage (90; 90') et la meule mère (34) se touchent au plus en un seul point de contact à chaque moment du dressage.

8. Procédé selon la revendication 7, **caractérisé en ce que** l'outil de dressage (90; 90') est dérivé d'une roue dentée avec un nombre de dents de conception z, un nombre de dents (91) réduit par rapport au nombre de dents de conception z étant présent sur la roue dentée et au moins une dent étant omise à chaque fois entre deux dents (91) présentes.

9. Machine-outil, comprenant
une meule mère (34);
un entrainement de meule mère (35) pour générer un mouvement de rotation de base de la meule mère (34) autour d'un axe de la meule mère;
un outil de dressage en forme de roue dentée (90, 90');
une broche porte-pièce ou de dressage pour générer un mouvement de rotation de base de l'outil de dressage (90, 90') autour d'un axe de la broche porte-pièce ou de dressage, l'axe de la broche porte-pièce ou de dressage s'étendant de manière croisée par rapport à l'axe de la meule mère;
un entrainement de shifting (37) pour déplacer la meule mère (34) et la broche porte-pièce ou de dressage l'une par rapport à l'autre le long de l'axe de la meule mère;
un dispositif d'avance horizontal (32) pour rapprocher et éloigner la meule mère (34) et l'outil de dressage (90, 90') l'un de l'autre; et
une commande numérique (45) qui est conçue pour coupler électroniquement l'entrainement de la meule mère (35), la broche porte-pièce ou de dressage et l'entrainement de shifting (37) afin de générer un mouvement de roulement de base entre la meule mère (34) et l'outil de dressage (90, 90') pendant le dressage,
**caractérisé en ce que**
que la commande numérique (45) est conçue pour commander en plus la broche porte-pièce ou la broche de dressage, l'entrainement de la meule mère (35) et/ou l'entrainement de shifting (37) de telle sorte qu'un mouvement relatif supplémentaire est superposé au mouvement de roulement de base afin de produire des modifications supplémentaires d'au moins un flanc (6) de la meule mère (34),
en superposant au mouvement de rotation de base de l'outil de dressage (90, 90') un mouvement de rotation supplémentaire autour de l'axe de l'outil de dressage, afin de générer au moins une partie du mouvement relatif supplémentaire, et/ou
en superposant au mouvement de rotation de base de la meule mère (34) un mouvement de rotation supplémentaire autour de l'axe de la meule mère, afin de générer au moins une partie du mouvement relatif supplémentaire, et/ou
en superposant au mouvement de shifting un mouvement axial supplémentaire entre la meule mère (34) et l'outil de dressage (90; 90') le long de l'axe de la meule mère, afin de générer au moins une partie du mouvement relatif supplémentaire.

10. Machine-outil, comprenant
une meule mère (34);
un entrainement de meule mère (35) pour générer un mouvement de rotation de base de la meule mère (34) autour d'un axe de la meule mère;
un outil de dressage en forme de roue dentée (90, 90');
une broche porte-pièce ou de dressage pour générer un mouvement de rotation de base de l'outil de dressage (90, 90') autour d'un axe de la broche porte-pièce ou de dressage, l'axe de la broche porte-pièce ou de dressage s'étendant de manière croisée par rapport à l'axe de la meule mère;
un entrainement de shifting (37) pour déplacer la meule mère (34) et la broche porte-pièce ou de dressage l'une par rapport à l'autre le long de l'axe de la meule mère;
un dispositif d'avance horizontal (32) pour rapprocher et éloigner la meule mère (34) et l'outil de dressage (90, 90') l'un de l'autre; et
une commande numérique (45) qui est conçue pour coupler électroniquement l'entrainement de la meule mère (35), la broche porte-pièce ou de dressage et l'entrainement de shifting, afin de générer un mouvement de roulement de base entre la meule mère (34) et l'outil de dressage (90, 90') pendant le dressage,
**caractérisée en ce que** la machine-outil présente un entrainement supplémentaire (44; 80) pour entraîner l'outil de dressage (90), l'entrainement supplémentaire (44; 80) étant monté sur la broche porte-pièce ou de dressage de telle sorte que l'entrainement supplémentaire (44; 80) tourne avec le mouvement de rotation de base, l'outil de dressage (90, 90') étant monté sur une broche de l'entrainement supplémentaire (44; 80); 80), et **en ce que** la commande numérique (45) est conçue pour commander l'entrainement supplémentaire (44; 80) de telle sorte qu'il superpose un mouvement de rotation supplémentaire autour de l'axe de la broche porte-pièce ou de dressage au mouvement de rotation de base de l'outil de dressage (90, 90'), afin de produire des modifications supplémentaires d'au moins un flanc (6) de la meule mère (34).

11. Machine-outil selon la revendication 9 ou 10, dans laquelle l'outil de dressage (90, 90') est garni de grains de matière dure et est dérivé d'une roue dentée avec un nombre de dents de conception z, un nombre de dents (91) réduit par rapport au nombre de dents de conception z étant présent sur la roue dentée et au moins une dent étant omise respectivement entre deux dents (91) existantes, et l'outil de dressage présentant de préférence, à la base de la dent, des zones (92) garnies de grains de matière dure pour un tournage d'un diamètre extérieur de la meule mère et/ou, à la tête de la dent, des zones (93) garnies de grains de matière dure pour un meulage en plongée d'un fond de filet de la meule mère.

12. Machine-outil selon la revendication 11, **caractérisée en ce que** le même nombre de dents est omis entre deux dents existantes (91).

13. Machine-outil selon la revendication 11, **caractérisée en ce que**, réparti sur la périphérie de l'outil de dressage, le même nombre de dents n'y est pas omis entre les dents existantes (91).

14. Machine-outil selon la revendication 11, **caractérisée en ce que** deux ou trois dents sont respectivement omises entre deux dents existantes.
